(19) Europäisches Patentamt
European Patent Office
Office européen des brevets

(11) **EP 3 095 102 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **14824435.3**

(22) Anmeldetag: **17.12.2014**

(51) Internationale Patentklassifikation (IPC):
**G08G 1/0965** *(2006.01)*    **G08G 1/04** *(2006.01)*
**G08G 1/0962** *(2006.01)*    **G06V 20/56** *(2022.01)*

(52) Gemeinsame Patentklassifikation (CPC):
**G08G 1/0962; B60W 30/12; B60W 40/04;**
**G06V 20/588; G08G 1/04;** G08G 1/0965

(86) Internationale Anmeldenummer:
**PCT/EP2014/078191**

(87) Internationale Veröffentlichungsnummer:
**WO 2015/106914 (23.07.2015 Gazette 2015/29)**

(54) **VERFAHREN UND SYSTEM ZUR ERKENNUNG EINER RETTUNGSGASSENSITUATION**

METHOD AND SYSTEM FOR DETECTING AN EMERGENCY LANE SITUATION

SYSTÈME ET PROCÉDÉ PERMETTANT DE DÉTECTER UNE SITUATION DE COULOIR DE SECOURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2014 DE 102014200700**

(43) Veröffentlichungstag der Anmeldung:
**23.11.2016 Patentblatt 2016/47**

(73) Patentinhaber: **Bayerische Motoren Werke Aktiengesellschaft**
**80809 München (DE)**

(72) Erfinder:
• **SCHWARZ, Loren**
**81539 München (DE)**
• **KÄMPCHEN, Nico**
**85417 Marzling (DE)**

(56) Entgegenhaltungen:
DE-A1-102011 102 024    DE-A1-102012 210 252
DE-A1-102012 211 568    DE-B3-102012 200 950

## Beschreibung

Die vorliegende Erfindung betrifft ein Verfahren und ein System zur Erkennung einer Rettungsgassensituation.

Wenn auf einer mehrspurigen Richtungsfahrbahn eine Verkehrssituation auftritt, die zu einem Rückstau führt, ist es in einigen Ländern auf Grund gesetzlicher Regelungen vorgeschrieben oder auf Grund freiwilliger Basis üblich, eine Rettungsgasse zu bilden, um einen Fahrweg für Rettungs- oder andere Einsatzfahrzeuge zu schaffen.

So ist es beispielsweise in Deutschland und Österreich jeweils vorgeschrieben, bei stockendem Verkehr auf Autobahnen mit mindestens zwei Fahrstreifen für eine Richtung eine Rettungsgasse in der Mitte der Richtungsfahrbahn, beziehungsweise bei Fahrbahnen mit drei oder mehr Fahrstreifen für eine Richtung zwischen dem linken und dem daneben liegenden Fahrstreifen zu bilden.

In Tschechien wird ebenfalls die Bildung einer Rettungsgasse vorgeschrieben, wobei auf Straßen mit zwei Fahrtstreifen in einer Richtung eine Rettungsgasse ebenfalls in der Mitte, bei Straßen mit drei Fahrstreifen in einer Richtung die Rettungsgasse jedoch zwischen dem rechten und dem mittleren Fahrstreifen zu bilden ist.

Um die Bildung einer Rettungsgasse zu unterstützen wurden im Stand der Technik verschiedene Ansätze entwickelt, um ein Fahrzeug oder dessen Fahrer über die Notwendigkeit zur Bildung einer Rettungsgasse zu informieren.

Das Dokument DE 10 2012 200 950 B3 offenbart ein Verfahren zur Erkennung von Sondersituationen im Straßenverkehr. Dabei wird der Bereich des Umfeldes eines Fahrzeugs mittels einer Erfassungseinheit erfasst und aus den erfassten Signalen wird ermittelt, ob im Erfassungsbereich befindliche Fahrzeuge eine Rettungsgasse bilden.

So ist aus dem Dokument DE 10 2011 102 024 A1 ein Verfahren zur Steuerung eines Fahrzeugs bekannt, wobei dem Fahrzeug Notfallinformationen über eine in Fahrtrichtung des Fahrzeuges vorausliegende Notfallsituation zugeführt werden können und im Fall einer Notfallsituation das Fahrzeug durch einen Lenkeingriff automatisch so gesteuert wird, dass eine Rettungsgasse für ein sich näherndes Einsatzfahrzeug gebildet wird. Die Notfallinformation wird dabei von dem Einsatzfahrzeug selbst an das Fahrzeug gesendet.

Dieser Ansatz hat den Nachteil, dass es notwendig ist, die Einsatzfahrzeuge jeweils mit zusätzlichen Sendevorrichtungen auszustatten, welche in der Lage sind, die Notfallinformation auszusenden, und dass es notwendig ist, die Fahrzeuge mit entsprechenden, zusätzlichen Antennen und Empfangsvorrichtungen auszustatten, um die Notfallinformation empfangen zu können, was mit entsprechenden Kosten, insbesondere für eine Nachrüstung bereits zugelassener Fahrzeuge verbunden wäre.

Darüber hinaus kann die Notfallinformation erst kurz vor dem sich nähernden Einsatzfahrzeug empfangen werden. In dieser Situation wird in vielen Fällen der Stau sich bereits ausgebildet haben und die Fahrzeuge werden in dieser Situation meist mit häufig sehr geringem Abstand zu einem jeweiligen Vorderfahrzeug zum Stillstand gekommen sein, oder sich nur mit sehr langsamer Geschwindigkeit bewegen. Bei Empfang der Notfaliinformation wird es den Fahrzeugen daher oftmals nur schwer und langsam möglich sein, die Rettungsgasse freizugeben. Verglichen mit der Situation, dass sich ein Einsatzfahrzeug mit eingeschaltetem Blaulicht, Sirene oder anderem, bekannten Signal nähert, kann daher keine wesentliche Verbesserung erwartet werden.

In dem Dokument DE 102 35 289 A1 wird ebenfalls vorgeschlagen, Einsatzfahrzeuge mit einem Sender auszustatten, mittels derer eine entsprechende Notfallinformation gesendet werden kann. In diesem Fall wird die Notfallinformation von mit entsprechenden Empfängern ausgestatteten Ampelanlagen empfangen, um letztere in ein Sonderprogramm umzuschalten, bei dem die Ampelsignale für alle Richtungen auf rot blinkend umgeschaltet werden. Fahrzeuge, die sich der Ampelanlage nähern, wissen nun, dass sich ein Einsatzfahrzeug in einer entsprechenden Notfallsituation nähert, und können daher eine Rettungsgasse bilden, bis die Ampelanlage das Sonderprogramm abschaltet und zu normalem Betrieb zurückkehrt.

Bei diesem Vorgehen ist es nicht notwendig, die Fahrzeuge mit entsprechenden Empfängern auszustatten, allerdings ist dieses Vorgehen nur zum Einsatz im Bereich von Ampelanlagen geeignet.

Das Dokument DE 10 2010 051 245 A1 beschreibt ein Verfahren zum Ausgeben von Warnsignalen, wobei über einen Traffic Message Channel Meldungen über Verkehrsbeeinträchtigungen an ein Fahrzeugnavigationssystem gesendet werden und das Fahrzeugnavigationssystem basierend darauf ein Warnsignal ausgibt und beispielsweise im Falle eines Unfalls als Stauursache die Bildung einer Rettungsgasse empfohlen wird. Ein ähnliches Verfahren ist ebenfalls aus den Dokument DE 103 28 256 A1 bekannt.

Da bei diesem Ansatz die Bildung einer Rettungsgasse basierend auf Informationen empfohlen wird, die über einen Traffic Message Channel gesendet wird, besteht grundsätzlich die Möglichkeit, Fahrzeugführer unabhängig vom Eintreffen von Einsatzfahrzeugen entsprechend zu informieren und zur Bildung einer Rettungsgasse anzuhalten. Es zeigt sich jedoch, dass von der Sendezentrale für den Traffic Message Channel Staus oder andere Verkehrsbeeinträchtigungen häufig erst nach einer wesentlichen zeitlichen Verzögerung erkannt und entsprechende Staumeldungen beziehungsweise Meldungen über andere Verkehrsbeeinträchtigungen gesendet werden. Eine zuverlässige und rechtzeitige Information der Fahrzeugführer ist bei diesem Ansatz daher nur schwer möglich. Ebenfalls kommt es häufig vor, dass Staumeldungen beziehungsweise Meldungen über andere Verkehrsbeeinträchtigungen weiterhin gesendet werden, obwohl der Stau sich bereits aufgelöst hat beziehungsweise die Verkehrsbehinderung nicht länger vorliegt. In diesem Fall werden die Fahrzeugführer fälschlich zur Bildung einer Rettungsgasse aufgefordert, obwohl der Anlass hierzu nicht länger besteht. Darüber hinaus zeigt sich weiter, dass die Stau- oder Verkehrsbehinderungsinformation häufig nur mit einer relativ ungenauen Positionsangabe gegeben wird, die sich typischer Weise lediglich auf einen längeren Streckenabschnitt bezieht. Auch dies wird häufig dazu führen, dass Fahrzeugführer nicht wünschenswert genau zur Bildung einer Rettungsgasse angehalten werden können. Im Ergebnis wird daher die Wahrscheinlichkeit bestehen, dass die Fahrzeugführer derartige Systeme als unzuverlässig wahrnehmen und deaktivieren werden.

Mit der großen zeitlichen und örtlichen Ungenauigkeit dieser Ansätze, auf die Bildung einer Rettungsgasse hinzuweisen, ist es daher kaum möglich, wie in einigen Staaten vorgeschrieben, einen Fahrer eines Fahrzeugs bereits dann zur Bildung einer Rettungsgasse zu veranlassen, wenn der Verkehr zu stocken und der Stau sich zu bilden beginnt.

Diese zeitliche und örtliche Ungenauigkeit, verbunden zudem mit dem Mangel an Information, an welcher seitlichen Lage und/oder mit welcher Breite eine Rettungsgasse gebildet ist oder werden soll, machen die genannten Ansätze auch ungeeignet zur Verwendung für automatische Reaktionen des Fahrzeugs, wie beispielsweise zur automatischen Aktivierung und Deaktivierung von Stauassistenzfunktionen, oder zur Beeinflussung oder Auslösung anderer Fahrerassistenzfunktionen eines Fahrzeuges.

Es ist daher eine Aufgabe der vorliegenden Erfindung, ein Verfahren und ein System zur Erkennung einer Rettungsgassensituation anzugeben, welche die vorstehenden Nachteile überwindet.

Eine weitere Aufgabe der vorliegenden Erfindung ist es, ein Verfahren und ein System zur Erkennung einer Rettungsgassensituation anzugeben, welche eine zuverlässige und zeitnahe Erkennung einer Rettungsgassensituation erlauben.

Ebenfalls eine Aufgabe der vorliegenden Erfindung ist es, ein Verfahren und ein System zur Erkennung einer Rettungsgassensituation anzugeben, welche eine Erkennung einer Rettungsgassensituation derart erlaubt, dass auf Basis der Erkennung eine Fahrerassistenzfunktion des Fahrzeugs hinreichend sicher und zuverlässig aktiviert, deaktiviert oder anderweitig beeinflusst werden kann.

Eine nochmals weitere Aufgabe der vorliegenden Erfindung ist es, ein Verfahren und ein System zur Erkennung einer Rettungsgassensituation anzugeben, welche sich kostengünstig realisieren lassen und insbesondere keine zusätzlichen, dedizierten Einrichtungen am Fahrzeug und/oder an Einsatzfahrzeugen erfordert.

Die vorstehenden und andere Aufgaben der vorliegenden Erfindung werden gelöst durch ein Verfahren und ein System zur Erkennung einer Rettungsgassensituation wie mit den Ansprüchen 1 und 13 definiert. Weitere bevorzugte Ausführungsformen sind in den abhängigen Ansprüchen dargelegt.

Als eine Lösung wird ein Verfahren angegeben zur Erkennung einer Rettungsgassensituation für ein Fahrzeug nach Anspruch 1.

Mit dem vorgeschlagenen Verfahren wird die Bildung einer Rettungsgasse erkannt, indem beobachtet und analysiert wird, wie sich andere Fahrzeuge im Umfeld des eigenen Fahrzeugs, als Ego-Fahrzeugs bezeichnet, verhalten. Wenn sich eine Rettungsgasse im Umfeld des Ego-Fahrzeugs bildet, oder wenn sich das Ego-Fahrzeug einer gebildeten Rettungsgasse nähert, kann dies daher erkannt werden, indem das für eine Rettungsgasse charakteristische Fahrverhalten anderer Fahrzeuge erfasst wird, wie insbesondere ein vergrößerter Abstand zwischen anderen Fahrzeugen auf benachbarten Fahrspuren, um die Rettungsgasse auszubilden, sowie ein lateraler Versatz, bei dem sich die anderen Fahrzeuge nicht mehr im Wesentlichen mittig einer jeweiligen Fahrspur bewegen, sondern sich in einer lateralen Richtung versetzt bewegen, um Raum für die Rettungsgasse zu schaffen.

Es kann so auf eine schnelle und zuverlässige Weise eine Rettungsgassensituation erkannt werden, was es dem Ego-Fahrzeug ermöglichen kann, dass Fahrerassistenzfunktionen mit Längs- und Querregelung im Fall einer Rettungsgassensituation adäquat reagieren können. Dadurch kann ein mögliches Sicherheitsrisiko sicher vermieden werden, das sich einstellen könnte, wenn auf Grund einer nicht erkannten Rettungsgassensituation das Ego-Fahrzeug, sei es geführt vom Fahrer oder sei es unter Führung des Fahrzeugs durch eine Fahrerassistenzfunktion, keine der Rettungsgassensituation entsprechende Aktion ausführt und daher die Bildung der Rettungsgasse blockiert würde.

Weiter wird eine Ausprägungsstärke für zumindest einen der folgenden Indikatoren ermittelt: ob andere Fahrzeuge kontinuierlich auf Fahrspurmarkierungen fahren, und/oder ob andere Fahrzeuge, die sich auf einer ersten Fahrspur bewegen, in einer ersten Richtung lateral versetzt sind, und ob andere Fahrzeuge, die sich auf einer hierzu benachbarten zweiten Fahrspur bewegen, in einer zweiten, zur ersten Richtung entgegengesetzten Richtung lateral versetzt sind, wobei bevorzugt, im Fall von drei oder mehr Fahrspuren, weiter ermittelt wird, ob andere Fahrzeuge, die sich auf einer weiteren, dritten Fahrspur bewegen, die der ersten oder der zweiten Fahrspur benachbart ist, in einer gleichen Richtung lateral versetzt sind, wie die andere Fahrzeuge, die sich auf der hierzu benachbarten ersten oder zweiten Fahrspur bewegen.

Diese weiteren Indikatoren können wertvolle weitere Informationen liefern, um das Vorliegen einer Rettungsgassensituation zu bestätigen oder zu verneinen.

Vorzugsweise kann ein Untersuchungsbereich definiert sein, wobei nur diejenigen anderen Fahrzeuge berücksichtigt werden, die eine Fahrzeugposition innerhalb des Untersuchungsbereichs aufweisen.

Indem ein Untersuchungsbereich definiert wird, kann der Bereich der Fahrbahn, der zur Auswertung des Verhaltens anderer Fahrzeuge zur Bestimmung, ob eine Rettungsgassensituation vorliegt oder nicht, fest vorgegeben werden. Auf diese Weise kann verhindert werden, dass Änderungen in einem Erfassungsbereich, in dem andere Fahrzeuge erfasst werden können, welche beispielsweise durch eine geänderte Krümmung der Fahrbahn oder durch eine geänderte Verkehrsdichte hervorgerufen werden können, das Ergebnis der Rettungsgassensituationserkennung negativ beeinflussen.

Erfindungsgemäß wird für jeden der Indikatoren weiter ein Wert einer Aussagekraft bestimmt, welcher angibt, wie aussagekräftig der ermittelte Indikator ist, basierend auf der Anzahl der zur Ermittlung des betreffenden Indikators berücksichtigten anderen Fahrzeuge und/oder die Zeitdauer und/oder die Wegstrecke, für welche die ermittelte Ausprägungsstärke des betreffenden Indikator über einem Schwellenwert liegt.

Im Schritt des Bestimmens, basierend auf dem oder den ermittelten Indikatoren, ob eine Rettungsgassensituation vorliegt, wird ein Wahrscheinlichkeitswert für das Vorliegen einer Rettungsgasse berechnet, wobei vorzugsweise aus den Ausprägungsstärken der ermittelten Indikatoren ein Ausprägungsstärken-Gesamtwert und aus den Werten der Aussagekraft der betreffenden Indikatoren ein Aussagekraft-Gesamtwert berechnet und miteinander multipliziert werden, um den Wahrscheinlichkeitswert für das vorliegen einer Rettungsgassensituation zu berechnen.

Zur Bestimmung der lateralen Abstände zwischen anderen Fahrzeugen können vorzugsweise die lateralen Positionen der anderen Fahrzeuge in einem Histogramm eingetragen werden, wobei der Abstand zwischen anderen Fahrzeugen auf benachbarten Fahrspuren bestimmt wird als der Abstand zwischen benachbarten Spitzen des Histogramms, wobei bevorzugt nur solche Spitzen berücksichtigt werden, die einen vorgegebenen Schwellenwert überschreiten.

Bevorzugt ist vorgesehen, dass die erfassten Fahrzeugpositionen der anderen Fahrzeuge umgerechnet werden in entkrümmte Koordinaten, wobei insbesondere ein Verlauf der Ego-Fahrspur zu Grunde gelegt werden kann und die Fahrzeugpositionen der anderen Fahrzeuge angegeben werden können mit einer Längskoordinate, welche den Abstand entlang einer Fahrspur des Ego-Fahrzeugs angibt, und einer lateralen Koordinate, welche den lateralen Abstand des betreffenden anderen Fahrzeugs zur Fahrspur des Ego-Fahrzeugs angibt.

Es kann vorzugsweise auch vorgesehen sein, dass die für die erkannten anderen Fahrzeuge erfassten Fahrzeugpositionen für zumindest eine vorbestimmte Zeitdauer aufgezeichnet und gespeichert werden, um für die anderen Fahrzeuge jeweils zugeordnete Trajektorien zu bilden.

Weiter bevorzugt kann ein Zusammenfassen von Trajektorien für die anderen Fahrzeuge zu kollektiven Trajektorien vorgesehen sein, wobei die Bestimmung, welche der Trajektorien für die anderen Fahrzeuge jeweils zu einer kollektiven Trajektorie zusammenzufassen sind, getroffen wird basierend auf einer Fahrspurzuordnung der anderen Fahrzeuge, und/oder einer jeweiligen Lage der anderen Trajektorien für die anderen Fahrzeuge relativ zu den Verläufen der Fahrspurmarkierungen, und/oder einem jeweiligen lateralen Abstand der Trajektorien für die anderen Fahrzeuge zueinander, wobei bevorzugt zwei oder mehr Trajektorien für die anderen Fahrzeuge als zu einer kollektiven Trajektorie zusammenzufassen bestimmt werden, wenn diese jeweils anderen Fahrzeugen zugeordnet sind, die einer gleichen Fahrspurzugeordnet sind, und/oder wenn diese jeweils zwischen zwei gleichen Fahrspurmarkierungsverläufen liegen, und/oder wenn diese jeweils einen lateralen Abstand voneinander aufweisen, der weniger als einen vorgegebenen Wert beträgt, und wobei ein jeweiliger kollektiver Trajektorienverlauf bevorzugt bestimmt wird basierend auf einer Ausgleichsrechnung, um Parameter eines Polynoms zweiten Grades oder höher, oder einer Klothoide zu bestimmen, das beziehungsweise die durch die Menge der Trajektorienpunkte der zusammenzufassenden Trajektorien gelegt wird, wobei die Ausgleichsrechnung vorzugsweise auf der Methode der kleinsten Quadrate basiert.

Das Bilden von kollektiven Trajektorien erlaubt eine Aggregation und Mittelung von Information auf Fahrspurebene, was zu einer einfacheren und zuverlässigeren Auswertung der lateralen Abstände zwischen benachbarten Fahrspuren und/oder relativ zum Verlauf von Fahrspurmarkierungen erlaubt. Es kann so die Zuverlässigkeit der Erkennung einer Rettungsgassensituation weiter verbessert werden.

Der Verlauf von Fahrspurmarkierungen und/oder der Fahrspurverlauf kann vorzugsweise mittels einem kamerabasierten Fahrspurerkennungssystem und/oder basierend auf Informationen einer digitalen Karte bestimmt werden.

Das Ego-Fahrzeug kann auch eine Warneinheit zum Hinweisen eines Fahrers des Ego-Fahrzeugs auf eine Rettungsgassensituation und/oder eine Stauassistenzfunktionseinheit aufweisen, und die Warneinheit kann aktiviert werden, wenn bestimmt wird, dass eine Rettungsgassensituation vorliegt, und/oder die Stauassistenzfunktionseinheit kann deaktiviert werden, wenn bestimmt wird, dass eine Rettungsgassensituation vorliegt, und kann wieder aktiviert werden, wenn bestimmt wird, dass eine Rettungsgassensituation nicht oder nicht mehr vorliegt.

Als eine weitere Lösung wird ein System nach Anspruch 13 angegeben zur Erkennung einer Rettungsgassensituation für ein Fahrzeug, als ein Ego-Fahrzeug, das sich auf einer Fahrbahn mit mehreren Fahrspuren bewegt.

Als eine nochmals weitere Lösung wird ein Fahrzeug angegeben, welches das System zur Erkennung einer Rettungsgassensituation aufweist.

Die Erfindung wird im Folgenden an Hand von Ausführungsbeispielen beschrieben werden, mit Bezug auf die Zeichnungen:

Fig. 1       zeigt schematisch ein Fahrzeug, das mit einem System zum Schätzen eines Fahrspurverlaufs ausgestattet ist, gemäß einer Ausführungsform;

Fig. 2A       zeigt beispielhaft eine Situation bei normalem Verkehr auf einer dreispurigen Fahrbahn;

Fig. 2B       zeigt beispielhaft eine Situation bei ausgebildeter Rettungsgasse auf einer dreispurigen Fahrbahn;

Fig. 3       zeigt einen Ablauf eines Verfahrens zur Erkennung einer Rettungsgassensituation gemäß einer ersten Ausführungsform;

Fig. 4       zeigt einen vergrößerten Ausschnitt der Figur 2B;

Fig. 5       zeigt beispielhaft ein Histogramm zur Bestimmung des lateralen Abstands zwischen anderen Fahrzeugen;

Fig. 6       zeigt einen weiteren vergrößerten Ausschnitt der Figur 2B;

Fig. 7       zeigt beispielhaft die Bestimmung einer auszugebenden Information basierend auf einer Wahrscheinlichkeit für das Vorliegen einer Rettungsgassensituation;

Fig. 8       zeigt einen Ablauf eines Verfahrens zur Erkennung einer Rettungsgassensituation gemäß einer zweiten Ausführungsform;

Fig. 9A bis 9C       dienen der Erläuterung der Bildung von Trajektorien für andere Fahrzeuge;

Fig. 10       zeigt beispielhaft für andere Fahrzeuge gebildete Trajektorien; und

Fig. 11       zeigt beispielhaft gebildete kollektive Trajektorien.

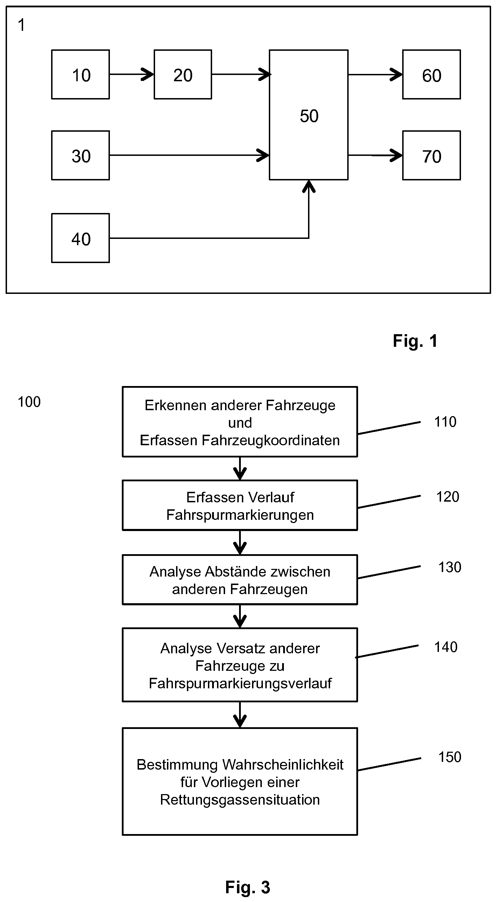

Die Figur 1 zeigt schematisch ein Fahrzeug 1 gemäß einer Ausführungsform. Das Fahrzeug wird auch als eigenes Fahrzeug beziehungsweise als Ego-Fahrzeug 1 bezeichnet.

Wie in der Figur 1 dargestellt, kann das Ego-Fahrzeug 1 ein Kamerasystem 10 aufweisen, das eingerichtet ist, einen Bereich vor dem Ego-Fahrzeug 1 zu erfassen. Das Kamerasystem 10 ist mit einer zugehörigen Bildverarbeitungseinheit versehen und ist eingerichtet, um Fahrstreifenmarkierungen zu erkennen. Die von der Kamera 10 erfassten Daten können an ein System 20 zur kamerabasierten Fahrspurverlaufserkennung ausgegeben werden, welches das Vorhandensein und die Positionen der erkannten Fahrspurmarkierungen und Fahrbahnbegrenzungen auswertet, um daraus Verläufe der Fahrspurmarkierungen bestimmen und auszugeben.

Das in der Figur 1 dargestellte Ego-Fahrzeug 1 kann weiter ein Radarsensorsystem 30 aufweisen, das eingerichtet ist, den Bereich vor dem Ego-Fahrzeug 1 zu erfassen und Objekte, insbesondere andere, vorausfahrende Fahrzeuge zu erkennen und deren Abstand, Winkel und vorzugsweise auch deren Relativgeschwindigkeiten relativ zum Ego-Fahrzeug 1 zu messen. Dies ist jedoch nicht beschränkend, und das Radarsensorsystem 30 kann auch eingerichtet sein, andere Fahrzeuge seitlich und/oder hinter dem Ego-Fahrzeug 1 zu , erkennen. Das Radarsensorsystem 30 ist bevorzugt weiter eingerichtet, erkannte Objekte zu verfolgen, mit einer eindeutigen Identifikation zu versehen und entsprechende Informationen bevorzugt in Form von Objektlisten auszugeben.

Wie in der Figur 1 weiter gezeigt, kann das Ego-Fahrzeug 1 ferner mit einer Odometrieeinheit 40 ausgestattet sein, welche Bewegungsdaten für das Ego-Fahrzeug 1 bereitstellt, wie etwa die Geschwindigkeit, Beschleunigung und Gierwinkel des Ego-Fahrzeugs 1.

Die von dem System 20 zur kamerabasierten Fahrspurverlaufserkennung ausgegebenen Informationen über den Verlauf von Fahrspuren und/oder den Verlauf von Fahrspurmarkierungen der Fahrbahn, die von dem Radarsensorsystem 30 ausgegebenen Informationen über erkannte andere Fahrzeuge und deren Position, sowie gegebenenfalls die Informationen, die von der Odometrieeinheit 40 ausgegeben werden, werden einem System 50 zur Erkennung einer Rettungsgassensituation bereitgestellt.

Das System 50 zur Erkennung einer Rettungsgassensituation verarbeitet die erhaltenen Informationen, um zu bestimmen, ob sich das Ego-Fahrzeug 1 in einer Situation befindet, in der eine Rettungsgasse gebildet ist oder gerade gebildet wird. Das System 50 zur Erkennung einer Rettungsgassensituation kann basierend auf dem Ergebnis der Bestimmung beispielsweise einen Wert ausgeben, der anzeigend für eine Wahrscheinlichkeit ist, dass eine Rettungsgassensituation vorliegt. Weiter bevorzugt kann vorgesehen sein, dass das System 50 zur Erkennung einer Rettungsgassensituation weiter eine Information bereitstellt, wo sich die Rettungsgasse relativ zum Ego-Fahrzeug 1 befindet.

Die von dem System 50 zur Erkennung einer Rettungsgassensituation ausgegebene Information kann beispielsweise einer Warneinheit 60 zugeführt werden, welche einen Fahrer des Ego-Fahrzeugs 1 auf eine Rettungsgassensituation hinweisen kann, um etwa den Fahrer des Ego-Fahrzeugs 1 zu veranlassen, eine entsprechende Reaktion auszuführen und sich entsprechend der Rettungsgassensituation zu verhalten.

Alternativ oder ergänzend kann die von dem System 50 zur Erkennung einer Rettungsgassensituation ausgegebene Information beispielsweise auch an eine Stauassistenzfunktionseinheit 70 bereitgestellt werden, um dazu verwendet zu werden, die Stauassistenzfunktionseinheit 70 zu aktivieren oder zu deaktivieren, oder um eine Aktivierung der Stauassistenzfunktionseinheit 70 zuzulassen oder zu unterbinden, und/oder um die Arbeitsweise der Stauassistenzfunktionseinheit 70 in einen Betriebsmodus zu versetzen, der einer Rettungsgassensituation angepasst ist. Als ein Beispiel kann die Stauassistenzfunktionseinheit 70 dazu ausgelegt sein, den Fahrer des Ego-Fahrzeugs 1 im Falle eines Staus oder im Falle zähfließenden Verkehrs dadurch zu unterstützen, dass die Stauassistenzfunktionseinheit 70 in diesen Situationen das Ego-Fahrzeug 1 autonom derart führt, dass das Ego-Fahrzeug 1 in der Mitte seiner Fahrspur und mit einem vorgegebenen Abstand zu einem Vorderfahrzeug bewegt wird, so dass das Ego-Fahrzeug 1 automatisch im Verkehr "mitschwimmt". Um zu vermeiden, dass in einer Rettungsgassensituation bei aktivierter Stauassistenzfunktionseinheit 70 das Ego-Fahrzeug 1 weiterhin in der Mitte seiner Fahrspur bewegt wird und eventuell die Bildung einer Rettungsgasse behindert, kann daher die von dem System 50 zur Erkennung einer Rettungsgassensituation ausgegebene Information dazu verwendet werden, um die Stauassistenzfunktionseinheit 70 zu deaktivieren, wenn erkannt wird, dass eine Rettungsgassensituation vorliegt. Bevorzugt kann dabei vorgesehen sein, dass der Fahrer des Ego-Fahrzeugs 1 aufgefordert wird, selbst wieder das Führen des Ego-Fahrzeugs 1 zu übernehmen, wobei gleichzeitig auch ein Hinweis auf die vorliegende Rettungsgassensituation gegeben werden kann. Der Fahrer des Ego-Fahrzeugs 1 kann nun das Ego-Fahrzeug 1 entsprechend führen, um sich in die Bildung der Rettungsgasse einzufügen. Vorzugsweise kann weiter vorgesehen sein, dass die Stauassistenzfunktionseinheit 70 erneut aktiviert wird, wenn erkannt wird, dass eine Rettungsgassensituation nicht länger vorliegt.

Die von dem System 50 zur Erkennung einer Rettungsgassensituation ausgegebene Information kann von der Stauassistenzfunktionseinheit 70 und/oder einer anderen Fahrerassistenzfunktionseinheit, welche eingerichtet ist, das Ego-Fahrzeug 1 autonom zu führen, auch dazu verwendet werden, um das Ego-Fahrzeug 1 so zu steuern und zu führen, dass das Ego-Fahrzeug 1 sich in die Bildung einer Rettungsgasse einfügt. So kann beispielsweise in diesem Fall die Stauassistenzfunktionseinheit 70 eingerichtet sein, das Ego-Fahrzeug 1 autonom so zu führen und zu steuern, dass das Ego-Fahrzeug 1 sich entsprechend in die Bildung der Rettungsgasse einfügt. Die von dem System 50 zur Erkennung einer Rettungsgassensituation ausgegebene Information kann in diesem Fall daher dazu dienen, den Betrieb der Stauassistenzfunktionseinheit 70 in einen entsprechenden Rettungsgassenmodus umzuschalten, beziehungsweise den Betriebsmodus und/oder Betriebsparameter der Stauassistenzfunktionseinheit 70 so zu beeinflussen oder zu ändern, dass das Ego-Fahrzeug 1 entsprechend der Rettungsgassensituation autonom geführt werden kann.

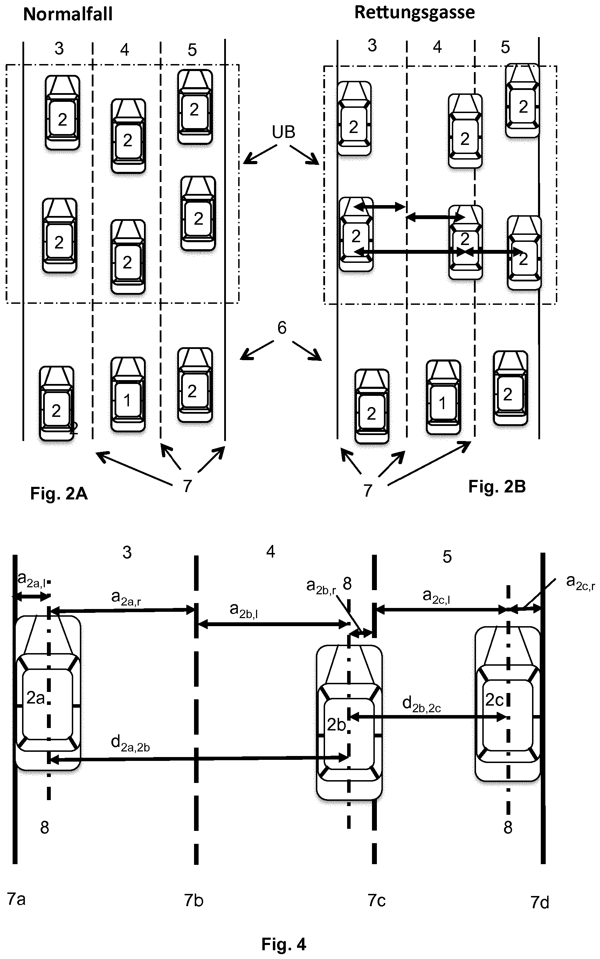

Die Arbeitsweise eines Systems 50 zur Erkennung einer Rettungsgassensituation gemäß einer ersten bevorzugten Ausführungsform soll nun mit Bezug auf die Figuren 2A bis 7 beschrieben werden.

In der Figur 2A ist zunächst eine Situation dargestellt, in der sich das Ego-Fahrzeug 1 zusammen mit einer Vielzahl anderer Fahrzeuge, kollektiv mit 2 bezeichnet, auf einer Fahrbahn 6, beispielsweise einer Autobahn, mit drei Fahrspuren 3, 4 und 5 bewegt. Fahrspurmarkierungen 7 zeigen dabei den Verlauf der Fahrspuren 3, 4, 5 an und begrenzen diese jeweils seitlich. Die Figur 2A stellt dabei schematisch eine Situation bei normalem Verkehr auf der Fahrbahn 6 dar, wobei sich üblicher Weise alle Fahrzeuge 1, 2 im Wesentlichen etwa mittig ihrer jeweiligen Fahrspur 3, 4, 5 bewegen.

In der Figur 2B ist schematisch eine Situation einer Rettungsgasse dargestellt, wobei in diesem Beispiel die Rettungsgasse zwischen der linken Fahrspur 3 und der mittleren Fahrspur 4 der Fahrbahn 6 gebildet ist. Die Rettungsgasse wird dabei dadurch gebildet, dass die anderen Fahrzeuge 2, die auf der linken Fahrspur 3 fahren, sich seitlich nach links versetzt bewegen, während die anderen Fahrzeuge 2, die auf der mittleren und der rechten Fahrspur 4, 5 fahren, jeweils nach rechts versetzt auf ihrer jeweiligen Fahrspur 4, 5 bewegen. Im Vergleich zur normalen Fahrsituation, die in der Figur 2A dargestellt ist, weisen daher die anderen Fahrzeuge 2 in einer Rettungsgassensituation wie in der Figur 2B schematisch dargestellt, relativ zueinander und relativ zu dem Verlauf der Fahrspurmarkierungen 7 versetzte, unterschiedliche seitliche Abstände auf, wie durch die Pfeile der Figur 2B angedeutet.

Wie der Vergleich der Figuren 2A und 2B zeigt, zeigen im Fall einer Rettungsgasse die anderen Fahrzeuge 2 ein charakteristisch geändertes Fahrverhalten. Dies zeigt sich insbesondere in einem vergrößerten lateralen Abstand zwischen anderen Fahrzeugen 2 auf zwei benachbarten Fahrspuren 3, 4, um Raum für die Bildung der Rettungsgasse zu schaffen. Ein vergrößerter Abstand zwischen anderen Fahrzeugen 2 auf benachbarten Fahrspuren 3, 4 stellt so einen Indikator dafür dar, dass eine Rettungsgassensituation vorliegt.

Das charakteristisch geändertes Fahrverhalten im Fall einer Rettungsgasse zeigt sich weiter in einem lateral versetzten Fahren der anderen Fahrzeuge 2, bei dem sich die anderen Fahrzeuge 2 nicht mehr im Wesentlichen mittig einer Fahrspur 3, 4, 5 befinden, sondern lateral versetzt sind, so dass sie nach einer lateralen Richtung hin näher an einen Fahrspurverlauf 7 rücken, der die Fahrspur 3, 4, 5 nach dieser Seite hin begrenzt, und sich gleichzeitig nach der anderen lateralen Richtung hin weiter von einem Fahrspurverlauf 7 entfernen, der die Fahrspur 3, 4, 5 nach dieser anderen Seite hin begrenzt. Der laterale Versatz von anderen Fahrzeugen 2 relativ zu den Fahrspurmarkierungsverläufen 7 stellt so ebenfalls einen Indikator dafür dar, dass eine Rettungsgassensituation vorliegt.

Wie in der Figur 2B dargestellt, kann es auch vorkommen, dass zumindest einzelne der anderen Fahrzeuge 2 sogar soweit in ihrer jeweiligen Fahrspur 3, 4, 5 lateral versetzt sind, dass diese auf den Fahrspurmarkierungen 7 fahren, was ebenfalls als Indikator für das Vorliegen einer Rettungsgassensituation gewertet werden kann.

Schließlich kann, im Fall von drei oder mehr Fahrspuren 3, 4, 5, auch betrachtet werden, ob neben den Fahrspuren 3, 4, zwischen denen die Rettungsgasse ausgebildet ist und zwischen denen folglich ein vergrößerter lateraler Abstand zwischen anderen Fahrzeugen 2 besteht, eine oder mehrere andere Fahrspuren 5 erkannt werden, welche hierzu benachbart sind und welche einen verkleinerten lateralen Abstand zwischen anderen Fahrzeugen 2 auf den betreffenden Fahrspuren 4, 5 aufweisen. Dies kann ebenfalls als ein weiterer Indikator für das Vorliegen einer Rettungsgassensituation gewertet werden.

Zur Ermittlung dieser Indikatoren können alle anderen Fahrzeuge 2, die erkannt und deren Positionen erfasst wurden, berücksichtigt werden. Bevorzugt kann jedoch vorgesehen sein, dass ein Untersuchungsbereich UB ausgebildet ist, der einen logischen Bereich definiert, wobei nur solche anderen Fahrzeuge 2, beziehungsweise Positionen von anderen Fahrzeugen 2, die innerhalb des Untersuchungsbereichs UB liegen, berücksichtigt werden. Die Lage und/oder Größe des Untersuchungsbereichs UB kann fest vorgegeben sein, oder kann abhängig von einer Fahrsituation, wie einer Verkehrsdichte, einen Straßentyp, und/oder einer Geschwindigkeit des Ego-Fahrzeugs 1, dynamisch geändert werden.

Die Figur 3 zeigt schematisch den Ablauf eines Verfahrens 100 zur Erkennung einer Rettungsgassensituation gemäß einer Ausführungsform.

In dem Verfahren 100 zur Erkennung einer Rettungsgassensituation werden in einem Schritt 110 mittels des Radarsystems 30 zunächst andere Fahrzeuge 2 in der Umgebung des Ego-Fahrzeugs 1 erkannt und deren Positionen erfasst. Die anderen Fahrzeuge 2 können dabei zu Zwecken der Objektverfolgung jeweils mit einer eindeutigen Identifikation ID versehen werden.

Mit Hilfe des System 20 zur kamerabasierten Fahrspurverlaufserkennung können in einem Schritt 120 die Fahrspurmarkierungen 7 und deren Position erfasst und ausgewertet werden, um basierend darauf Verläufe der Fahrspurmarkierungen 7 zu bestimmen.

In einem Schritt 130 können weiter die lateralen Abstände zwischen den erfassten anderen Fahrzeugen 2 bestimmt werden, wie mit Bezug auf die Figur 4 beispielhaft erläutert werden soll.

Die Figur 4 zeigt vergrößert einen Ausschnitt der Figur 2B, in dem drei andere Fahrzeuge 2 dargestellt sind und welche dem besseren Verständnis halber jeweils als 2a, 2b beziehungsweise 2c bezeichnet sind, wobei sich das andere Fahrzeug 2a auf der linken Fahrspur 3, das andere Fahrzeug 2b auf der mittleren Fahrspur 4 und das andere Fahrzeug 2c auf der rechten Fahrspur 5 bewegen.

In der Figur 4 ist der laterale Abstand zwischen den zwei anderen Fahrzeugen 2a, 2b, als lateraler Abstand $d_{2a,2b}$ zwischen den jeweiligen Mittellinien 8 der Fahrzeuge 2a, 2b dargestellt, und der laterale Abstand zwischen den zwei anderen Fahrzeugen 2b und 2c ist als lateraler Abstand $d_{2b,2c}$ zwischen den jeweiligen Mittellinien 8 der Fahrzeuge 2b und 2c dargestellt. Diese lateralen Abstände $d_{2a,2b}$, $d_{2b,2c}$ können berechnet werden, indem der Betrag der Differenz der lateralen Positionskomponenten der Positionen der beiden betrachteten anderen Fahrzeuge 2a, 2b beziehungsweise 2b, 2c gebildet wird.

Auf diese Weise können für eine Vielzahl von anderen Fahrzeugen 2 auf benachbarten Fahrspuren 3, 4, 5 ein jeweiliger lateraler Abstand $d_{2a,2b}$, $d_{2b,2c}$ berechnet werden, und die einzelnen ermittelten lateralen Abstände $d_{2a,2b}$, $d_{2b,2c}$ können beispielsweise aufsummiert und durch die Anzahl der einzelnen ermittelten lateralen Abstände $d_{2a,2b}$, $d_{2b,2c}$ dividiert werden, um einen Mittelwert für den lateralen Abstand $d_{2a,2b}$, $d_{2b,2c}$ von anderen Fahrzeugen 2 auf benachbarten Fahrspuren 3, 4, 5 zu bestimmen.

Die Bestimmung des lateralen Abstands $d_{2a,2b}$, $d_{2b,2c}$ zwischen anderen Fahrzeugen 2 auf jeweils benachbarten Fahrspuren 3, 4, 5 kann dabei auf direkte Weise berechnet werden, beispielsweise indem für zwei zu betrachtende andere Fahrzeuge 2 die jeweiligen erfassten Fahrzeugpositionen betrachtet werden und die Differenz der lateralen Fahrzeugpositionskomponenten gebildet wird. Auf diese Weise können für eine Vielzahl von anderen Fahrzeugen 2 auf jeweils benachbarten Fahrspuren 3, 4, 5 jeweils laterale Abstände $d_{2a,2b}$, $d_{2b,2c}$ berechnet werden.

Um zu ermitteln, welche der anderen Fahrzeuge 2 sich auf jeweils benachbarten Fahrspuren 3, 4, 5 bewegen, und daher als Grundlage für die Bestimmung des Indikators für den lateralen Abstand herangezogen werden sollen, kann beispielsweise eine Zuordnung der anderen Fahrzeuge 2 zu jeweiligen Fahrspuren 3, 4, 5 der Fahrbahn 6 vorgenommen werden. Die Zuordnung kann insbesondere erfolgen, indem die von dem System 20 zur kamerabasierten Fahrspurverlaufserkennung ausgegebene Information über die Verläufe der Fahrspurmarkierungen 7 verwendet wird, um ein jeweiliges anderes Fahrzeug 2 basierend auf der erfassten Position des betreffenden anderen Fahrzeugs 2 derjenigen Fahrspur 3, 4 oder 5 zuzuordnen, die seitlich von dem Paar von Fahrspurmarkierungen 7 begrenzt wird, zwischen denen sich das betreffende andere Fahrzeug 2 befindet. Für den Fall, dass das Ego-Fahrzeug 1 über eine hochgenaue digitale Straßenkarte verfügt, kann es auch möglich sein, alternativ oder ergänzend zur Information über die Verläufe der Fahrspurmarkierungen 7, die von dem System 20 zur kamerabasierten Fahrspurverlaufserkennung ausgegeben wird, auf in der hochgenauen digitalen Straßenkarte verzeichnete Information über die Verläufe der Fahrspurmarkierungen 7 zurückzugreifen.

Alternativ kann es auch möglich sein, die Bestimmung, welche der anderen Fahrzeuge 2 sich auf jeweils benachbarten Fahrspuren 3, 4, 5 bewegen, auf andere Weise vorzunehmen. So können die anderen Fahrzeuge 2 beispielsweise nach deren lateraler Position gruppiert werden, wobei vermutet wird, dass zwei oder mehr andere Fahrzeuge 2, welche in unterschiedlichen Entfernungen vor dem Ego-Fahrzeug 1 im Wesentlichen die selbe laterale Position aufweisen, insbesondere sich in ihrer lateralen Position jeweils nur um weniger als das 0,3-fache, bevorzugt weniger als das 0,2-fache einer Fahrspurbreite unterscheiden, jeweils einer Gruppe von anderen Fahrzeugen 2 angehören, von denen vermutet wird, dass diese sich auf einer gleichen Fahrspur bewegen. Alternativ oder ergänzend kann auch ermittelt werden, welche der anderen Fahrzeuge 2 sich im Wesentlichen nebeneinander bewegen. So können beispielsweise andere Fahrzeuge 2 als sich im Wesentlichen nebeneinander bewegend identifiziert werden, wenn sie sich in ihrer Entfernung in Längsrichtung vom Ego-Fahrzeug 1 um weniger als beispielsweise 10 m, bevorzugt weniger als 5 m unterscheiden, und wenn sie sich in ihrer lateralen Position um mehr als beispielsweise das 0,7-fache der Fahrspurbreite unterscheiden. Von solchen sich im Wesentlichen nebeneinander bewegenden anderen Fahrzeugen 2 kann vermutet werden, dass sie sich auf unterschiedlichen Fahrspuren 3, 4, 5 bewegen. Mit diesen Vorgehensweisen können auch für den Fall, dass keine direkte Zuordnung der anderen Fahrzeugen 2 zu Fahrspuren 3, 4, 5 der Fahrbahn 6 möglich ist, jeweilige andere Fahrzeuge 2 identifiziert werden, die auf jeweils benachbarten Fahrspuren 3, 4, 5 vermutet werden, um als Basis für die Ermittlung des Indikators des lateralen Abstands zu dienen. Dies kann insbesondere für den Fall vorteilhaft sein, dass die Fahrspurmarkierungen 7 der Fahrbahn 6 beispielsweise wegen Abnutzung oder wegen widriger Wetterbedingungen, wie etwa einer schneebedeckten Fahrbahn, nur schwer oder nicht zu erkennen sind,

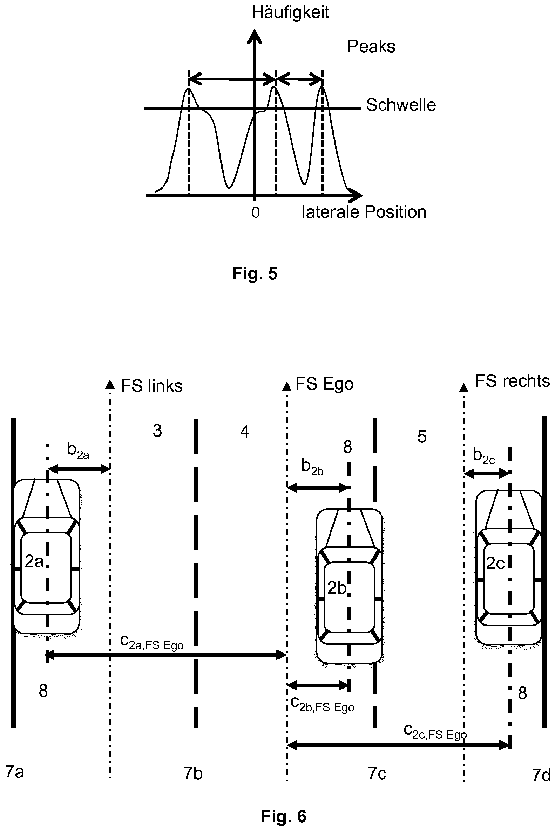

Neben den vorstehend beschriebenen Vorgehensweisen des direkten Bestimmens lateraler Abstände zwischen jeweiligen anderen Fahrzeugen 2 kann alternativ auch eine andere, indirekte Vorgehensweise angewandt werden, um laterale Abstände für die anderen Fahrzeuge 2 zu berechnen, wie in der Figur 5 dargestellt. Hierbei kann in einem Histogramm für jedes andere Fahrzeug 2 innerhalb des Untersuchungsbereichs UB ein entsprechender Eintrag an der lateralen Position des anderen Fahrzeugs 2 vorgenommen werden. Die Achse der lateralen Positionen des Histogramms kann dabei in regelmäßige Intervalle, als Klassen bezeichnet, unterteilt werden. Die Intervallbreite kann fest vorgegeben sein, wie beispielsweise eine Intervallbreite von 10 cm, 20 cm, oder 30 cm. Vorzugsweise kann vorgesehen sein, die Intervallbreite abhängig von der Anzahl der erkannten anderen Fahrzeuge 2 und/oder einer aktuellen Fahrspurbreite zu wählen. So kann beispielsweise eine kleinere Intervallbreite gewählt werden, umso weniger andere Fahrzeuge 2 erkannt wurden und/oder um so schmäler die Fahrspuren 3, 4, 5 in der Umgebung des Ego-Fahrzeugs 1 sind, und umgekehrt. Dies erlaubt es, die Histogrammauswertung dynamisch an eine gegebene Situation anzupassen und die Genauigkeit und Zuverlässigkeit der Auswertung zu erhöhen.

Für jedes andere Fahrzeug 2 kann ein singulärer Eintrag im Histogramm an der erkannten Position des betreffenden anderen Fahrzeugs 2, beziehungsweise in der Klasse erfolgen, welche die erkannte Position des betreffenden anderen Fahrzeugs 2 umfasst. Alternativ und bevorzugt kann vorgesehen sein, dass ein jeweiliger Positionswert eines einzutragenden anderen Fahrzeugs 2 mit einer Gewichtungsfunktion mathematisch gefaltet wird, um eine hinreichende Überlappung der entsprechenden im Histogramm zu akkumulierenden Information sicherzustellen. Als Gewichtungsfunktion kann beispielsweise eine Gauß'sche Glockenkurve verwendet werden, welche die Genauigkeit oder Kovarianz der Erfassung der lateralen Position des betreffenden anderen Fahrzeugs 2 wiederspiegelt. Als andere Gewichtungsfunktionen können beispielsweise eine Rechteckfunktion oder eine Dreiecksfunktion verwendet werden, beispielsweise entsprechend einer tatsächlichen Breite des betreffenden anderen Fahrzeugs 2, oder entsprechend einer nominellen Breite, die für alle anderen Fahrzeuge 2 vermutet wird.

Die Information über die laterale Positionierung der anderen Fahrzeuge 2 innerhalb des Untersuchungsbereichs UB wird auf diese Weise in dem Histogramm akkumuliert und es werden sich dabei für jede erkannte oder vermutete Fahrspur 3, 4, 5 eine entsprechende Spitze beziehungsweise ein entsprechender Peak in dem Histogramm ausbilden, wobei die Spitzen beziehungsweise Peaks die entsprechenden lateralen Positionen anzeigen, auf denen sich die größte Anzahl an anderen Fahrzeugen 2 auf den entsprechenden unterschiedlichen erkannten oder vermuteten Fahrstreifen 3, 4, 5 häufen.

Wie in der Figur 5 weiter dargestellt, kann weiter bevorzugt vorgesehen sein, eine Schwelle vorzusehen, wobei eine Spitze des Histogramms nur dann berücksichtigt wird, wenn der Spitzenwert die Schwelle überschreitet. Die Schwelle kann dabei fest vorgegeben sein, oder kann abhängig von anderen Verkehrsparametern, insbesondere einer Anzahl von anderen Fahrzeugen 2, die erfasst wurden, oder die innerhalb eines vorbestimmten Auswertungsbereichs erfasst wurden, dynamisch angepasst werden.

In dem Beispiel der Figur 5 zeigt das Histogramm drei Spitzen, die jeweils die Schwelle überschreiten. Die drei Spitzen stellen dabei die lateralen Positionen dar, auf denen sich die anderen Fahrzeuge 2 im Mittel auf den drei Fahrspuren 3, 4, 5 positionieren.

Aus dem Histogramm kann daher der gemittelte laterale Abstand zwischen anderen Fahrzeugen 2 auf benachbarten Fahrspuren 3, 4, 5 abgelesen werden als der Abstand zwischen zwei benachbarten Spitzen des Histogramms, wie durch die Doppelpfeile in der Figur 5 angezeigt. Im Beispiel der Figur 5 ergibt sich dabei, dass zwischen den anderen Fahrzeugen 2, die sich auf der linken Fahrspur 3 bewegen, und den anderen Fahrzeugen 2, die sich auf der mittleren Fahrspur 4 bewegen, ein vergrößerter lateraler Abstand besteht, während zwischen den anderen Fahrzeugen 2, die sich auf der mittleren Fahrspur 4 bewegen, und den anderen Fahrzeugen 2, die sich auf der rechten Fahrspur 5 bewegen, ein verminderter Abstand besteht.

Ergibt sich dabei ein lateraler Abstand, der im Wesentlichen der Breite einer Fahrspur entspricht, beispielsweise wenn der laterale Abstand weniger als das 1,2-fache der Fahrspurbreite beträgt, kann bestimmt werden, dass der Indikator des vergrößerten lateralen Abstandes nicht oder nur gering ausgeprägt ist. Wenn sich hingegen ein signifikant vergrößerter Abstand ergibt, beispielsweise wenn der laterale Abstand $d_{2a,2b}$ mehr als das 1,5-fache, bevorzugt mehr als das 1,7-fache der Fahrspurbreite beträgt, kann bestimmt werden, dass der Indikator des vergrößerten lateralen Abstandes stark ausgeprägt ist.

Ergibt sich ein Abstand, der im Wesentlichen der Breite einer Fahrspur entspricht, beispielsweise wenn der laterale Abstand mehr als das 0,9-fache der Fahrspurbreite beträgt, kann vorzugsweise weiter bestimmt werden, dass der Indikator des verminderten lateralen Abstandes nicht oder nur gering ausgeprägt ist. Wenn sich hingegen ein signifikant verringerter Abstand ergibt, beispielsweise wenn der laterale Abstand weniger als das 0,7-fache der Fahrspurbreite beträgt, kann bestimmt werden, dass der Indikator des verringerten lateralen Abstandes stark ausgeprägt ist.

Die Ausprägungsstärke eines Indikators kann dabei beispielsweise als ein Wert im Bereich von [0, 1] angegeben werden, wobei ein Wert von 1 eine extreme Ausprägungsstärke und ein Wert von 0 keine Ausprägungsstärke des Indikators anzeigt.

In einem Schritt 140 kann weiter der laterale Versatz der anderen Fahrzeuge 2 relativ zum Verlauf der Fahrspurmarkierungen 7 analysiert werden.

Wie in der Figur 4 dargestellt, bewegt sich das andere Fahrzeug 2a innerhalb seiner Fahrspur 4 nach links versetzt, um Raum für die Ausbildung der Rettungsgasse zu schaffen. Entsprechend ist ein Abstand $a_{2a,l}$ zwischen einer Mittelachse 8 des anderen Fahrzeugs 2a und der linken Fahrspurmarkierung 7a der von dem anderen Fahrzeug 2a eingenommenen Fahrspur 3 wesentlich geringer als ein Abstand $a_{2a,r}$ zwischen der Mittelachse 8 des anderen Fahrzeugs 2a und der rechten Fahrspurmarkierung 7b der von dem anderen Fahrzeug 2a eingenommenen Fahrspur 3.

Die weiteren anderen Fahrzeuge 2b und 2c bewegen sich auf den von diesen eingenommenen Fahrspuren 4, 5 jeweils lateral nach rechts versetzt, so dass die Abstände $a_{2b,r}$ und $a_{2c,r}$ zwischen jeweiligen Mittelachsen 8 der anderen Fahrzeuge 2b und 2c und den jeweiligen rechten Fahrspurmarkierungen 7c, 7d der von den anderen Fahrzeugen 2b und 2c eingenommenen Fahrspuren 4 beziehungsweise 5 wesentlich geringer ist als die entsprechenden Abstände $a_{2b,l}$ und $a_{2c,l}$ zwischen den jeweiligen Mittelachsen 8 der anderen Fahrzeuge 2b und 2c und den jeweiligen linken Fahrspurmarkierungen 7b, 7c der von den anderen Fahrzeugen 2b und 2c eingenommenen Fahrspuren 4 beziehungsweise 5.

Für jedes andere Fahrzeug 2 kann daher ein Wert berechnet werden, der anzeigend dafür ist, wie weit das betreffende andere Fahrzeug 2 lateral versetzt ist von einer normalen Fahrsituation, bei dem das betreffende andere Fahrzeug 2 im Wesentlichen in der Mitte einer Fahrspur 3, 4, 5 fährt. Der Wert des Versatzes kann dabei beispielsweise bestimmt werden als die Differenz zwischen dem lateralen Abstand $a_{2a,l}$, $a_{2b,l}$, $a_{2c,l}$ zur jeweiligen linksseitigen Fahrspurmarkierung 7a, 7b, 7c und dem lateralen Abstand $a_{2a,r}$, $a_{2b,r}$, $a_{2c,r}$ zur jeweiligen rechtsseitigen Fahrspurmarkierung 7b, 7c, 7d, gegebenenfalls dividiert durch die Fahrspurbreite, oder kann beispielsweise bestimmt werden als der Quotient des lateralen Abstands $a_{2a,1}$, $a_{2b,1}$, $a_{2c,1}$ zur jeweiligen linksseitigen Fahrspurmarkierung 7a, 7b, 7c, dividiert durch den lateralen Abstand $a_{2a,r}$, $a_{2b,r}$, $a_{2c,r}$ zur jeweiligen rechtsseitigen Fahrspurmarkierung 7b, 7c, 7d, oder umgekehrt. Auch in diesem Fall können die lateralen Abstände $a_{2a,1}$, $a_{2b,1}$, $a_{2c,1}$ beziehungsweise $a_{2a,r}$, $a_{2b,r}$, $a_{2c,r}$ direkt berechnet werden basierend auf den erfassten Fahrzeugpositionen und dem Verlauf der Fahrspurmarkierungen 7, oder können indirekt bestimmt werden basierend auf einem Histogramm, wie vorstehend mit Bezug auf die Ermittlung der lateralen Abstände zwischen anderen Fahrzeugen 2 beschrieben.

Es kann daher für jede Fahrspur 3, 4, 5 ein Indikator für den lateralen Versatz der anderen Fahrzeuge 2 relativ zum Verlauf der Fahrspurmarkierungen 7 bestimmt werden, dessen Ausprägungsstärke ebenfalls als ein Wert im Bereich [0, 1] angegeben werden kann, wobei der Wert beispielsweise bestimmt werden kann basierend auf einem Mittelwert der für die anderen Fahrzeuge 2, die sich auf der betreffenden Fahrspur 3, 4, 5 bewegen, bestimmten Versätze.

Alternativ kann vorgesehen sein, für alle Fahrspuren 3, 4, 5 gemeinsam nur einen Indikator für den lateralen Versatz der anderen Fahrzeuge 2 relativ zum Verlauf der Fahrspurmarkierungen 7 vorzusehen. In diesem Fall kann die Ausprägungsstärke des Indikators basierend auf einem Mittelwert der Versätze aller betrachteten anderen Fahrzeuge 2 bestimmt werden.

In der Figur 4 ist weiterhin zu erkennen, dass in diesem Beispiel das andere Fahrzeug 2b, um Raum für die Ausbildung der Rettungsgasse zu schaffen, innerhalb der von diesem anderen Fahrzeug 2b eingenommenen Fahrspur 4 so weit nach rechts gerückt ist, dass das Fahrzeug 2b "auf der Fahrspurmarkierung fährt", das heißt, dass die Fahrspurmarkierung 7c zumindest teilweise zwischen den Rädern des anderen Fahrzeugs 2b verläuft.

Es kann daher weiter ein Indikator des Fahrens auf Fahrstreifenmarkierungen vorgesehen sein als ein weiterer Indikator für das Vorliegen einer Rettungsgasse. Die Ausprägungsstärke dieses Indikators kann ebenfalls als ein Wert im Bereich zwischen $[0, 1]$ angegeben werden und kann bestimmt werden basierend auf der absoluten oder der relativen Anzahl der anderen Fahrzeuge 2, welche auf Fahrspurmarkierungen 7 fahren. Die Ausprägungsstärke kann dabei beispielsweise als gering angenommen werden, wenn kein oder nur ein anderes Fahrzeug 2 als auf einer Fahrspurmarkierung 7 fahrend erkannt wird, und kann als hoch angenommen werden, wenn mehr als eine vorbestimmte relative oder absolute Anzahl anderer Fahrzeuge 2 als auf Fahrspurmarkierungen 7 fahrend erkannt werden.

Wie in der Figur 6 dargestellt kann es auch möglich sein, den lateralen Versatz der anderen Fahrzeuge 2 innerhalb ihrer jeweiligen Fahrspur 3, 4, 5 nicht an Hand des Abstands $a_{2a,1}$, $a_{2b,1}$, $a_{2c,1}$ beziehungsweise $a_{2a,r}$, $a_{2b,r}$, $a_{2c,r}$ zu jeweiligen, die Fahrspur 3, 4, 5 linksseitig beziehungsweise rechtsseitig begrenzenden Fahrspurmarkierungen 7a, 7b, 7c, 7d zu bestimmen, sondern stattdessen abzustellen auf einen lateralen Versatz $b_{2a}$, $b_{2b}$, $b_{2c}$ relativ zu einem Fahrspurverlauf $FS_{links}$, $FS_{Ego}$, $FS_{rechts}$ der Fahrspur 3, 4, 5, auf der sich ein jeweiliges anderes Fahrzeug 2 bewegt. Die Fahrspurverläufe $FS_{links}$, $FS_{Ego}$, $FS_{rechts}$ können beispielsweise ermittelt werden basierend auf den von dem System 20 zur kamerabasierten Fahrspurverlaufserkennung erkannten Verlauf der Fahrspurmarkierungen 7. Es kann auch möglich sein, in dem Ego-Fahrzeug 1 eine hochgenaue digitale Karte bereitzustellen, in welcher entsprechende hochgenaue Informationen über Fahrspurverläufe $FS_{links}$, $FS_{Ego}$, $FS_{rechts}$ verzeichnet sind.

Die vorstehend beschriebenen Vorgehensweisen zur Bestimmung von lateralen Abständen beziehungsweise Versätzen $d_{2a,2b}$, $d_{2b,2c}$, $a_{2a,1}$, $a_{2b,1}$, $a_{2c,1}$, $a2a,r$, $a_{2b,r}$, $a_{2c,r}$, $b2a$, $b_{2b}$, $b_{2c}$ zwischen anderen Fahrzeugen 2, oder von anderen Fahrzeugen 2 zu Verläufen von Fahrspurmarkierungen 7 oder von anderen Fahrzeugen 2 zu Fahrspurverläufen $FS_{links}$, $FS_{Ego}$, $FS_{rechts}$ können ausgeführt werden basierend auf Fahrzeugpositionen, die in einem lokalen Koordinatensystem des Ego-Fahrzeugs 1 oder in einem globalen, weltfesten Koordinatensystem angegeben sind. Vorzugsweise jedoch können die vorstehend beschriebenen Vorgehensweisen ausgeführt werden basierend auf Fahrzeugpositionen, die in einem entkrümmten Koordinatensystem angegeben sind. Besonders bevorzugt kann dabei ein Verlauf der Ego-Fahrspur $FS_{Ego}$ zu Grunde gelegt werden und die Fahrzeugpositionen der anderen Fahrzeuge 2 können angegeben werden mit einer Längskoordinate, welche den Abstand eines anderen Fahrzeugs 2 vom Ego-Fahrzeug 1 entlang der Ego-Fahrspur $FS_{Ego}$ angibt, und einer lateralen Koordinate, welche den lateralen Abstand des betreffenden anderen Fahrzeugs 2 zur Ego-Fahrspur $FS_{Ego}$ angibt. Dies ist auch in der Figur 6 dargestellt, welche die lateralen Abstände der anderen Fahrzeuge 2a, 2b, 2c von der Ego-Fahrspur $FS_{Ego}$ als Abstände $c_{2a,FSEgo}$, $c_{2b,FSEgo}$ und $c_{2a,FSEgo}$ darstellt. Mit der Verwendung von entkrümmten Objektkoordinaten kann erreicht werden, dass die verschiedenen lateralen Abstände mit hoher Genauigkeit bestimmt werden können, ohne dass eine Straßenkrümmung, eine Änderung der Straßenkrümmung oder eine Änderung des Richtungswinkels des Ego-Fahrzeugs 1 die Bestimmung der verschiedenen lateralen Abstände negativ beeinflussen.

Erfindungsgemäß ist vorgesehen, dass für jeden Indikator neben einer Ausprägungsstärke weiter eine Aussagekraft bestimmt wird, welche angibt, wie aussagekräftig der betreffende Indikator ist. Die Aussagekraft kann dabei beispielsweise bestimmt werden basierend auf der Anzahl der anderen Fahrzeuge 2, welche zur Bestimmung der Ausprägungsstärke des betreffenden Indikators berücksichtigt wurden, oder auf einer Anzahl anderer Fahrzeuge 2 auf einer Fahrspur 3, 4, 5.

Alternativ oder ergänzend kann in die Bestimmung der Aussagekraft auch die Zeitdauer und/oder die Wegstrecke einbezogen werden, während welcher der betreffende Indikator über einem vorgegebenen Schwellenwert liegt. So kann beispielsweise ein Indikator als nicht oder nur gering aussagekräftig bewertet werden, wenn der betreffende Indikator nur für eine Wegstrecke von beispielsweise 0 m, < 3 m, oder < 10 m über dem betreffenden Schwellenwert liegt. Der Indikator kann beispielsweise als von mittlerer Aussagekraft bewertet werden, wenn der betreffende Indikator für eine Wegstrecke von beispielsweise zwischen 20 m und 80 m, zwischen 30 m und 70 m oder zwischen 40 m und 60 m über dem betreffenden Schwellenwert liegt. Der Indikator kann beispielsweise auch als von hoher Aussagekraft bewertet werden, wenn der betreffende Indikator für eine Wegstrecke von > 80 m, > 100 m oder > 150 m über dem betreffenden Schwellenwert liegt.

Basierend auf den verschiedenen Indikatoren, sowie deren jeweiliger Ausprägungsstärke und Aussagekraft, wird in einem Schritt 150 eine Wahrscheinlichkeit bestimmt dafür, ob eine Rettungsgassensituation vorliegt oder nicht.

Die Wahrscheinlichkeit für das Vorliegen einer Rettungsgassensituation kann dabei berechnet werden, indem zunächst aus den Werten der Ausprägungsstärke für die Indikatoren ein Ausprägungs-Gesamtwert berechnet wird und aus den Werten der Aussagekraft der Indikatoren ein Aussagekraft-Gesamtwert berechnet wird, beispielsweise als gewichtetes oder ungewichtetes Mittel oder als gewichtete oder ungewichtete Summe der einzelnen Werte der Ausprägungsstärke beziehungsweise der Aussagekraft. Der Ausprägungs-Gesamtwert und der Aussagekraft-Gesamtwert können dann miteinander multipliziert werden, um die Wahrscheinlichkeit für das Vorliegen einer Rettungsgassensituation zu berechnen.

Dies ist nicht beschränkend, und es kann die Wahrscheinlichkeit für das Vorliegen einer Rettungsgassensituation auch auf andere Weise berechnet werden. So können beispielsweise die Werte der Aussagekraft der Indikatoren jeweils mit einem vorgegebenen Schwellenwert verglichen werden, und es mögen nur diejenigen Indikatoren berücksichtigt werden zur Berechnung der Wahrscheinlichkeit für das Vorliegen einer Rettungsgassensituation, deren Aussagekraft jeweils die Schwelle überschreiten, wobei basierend auf den berücksichtigten Indikatoren wiederum ein Ausprägungs-Gesamtwert und ein Aussagekraft-Gesamtwert berechnet und miteinander multipliziert werden können, um die Wahrscheinlichkeit für das Vorliegen einer Rettungsgassensituation zu berechnen.

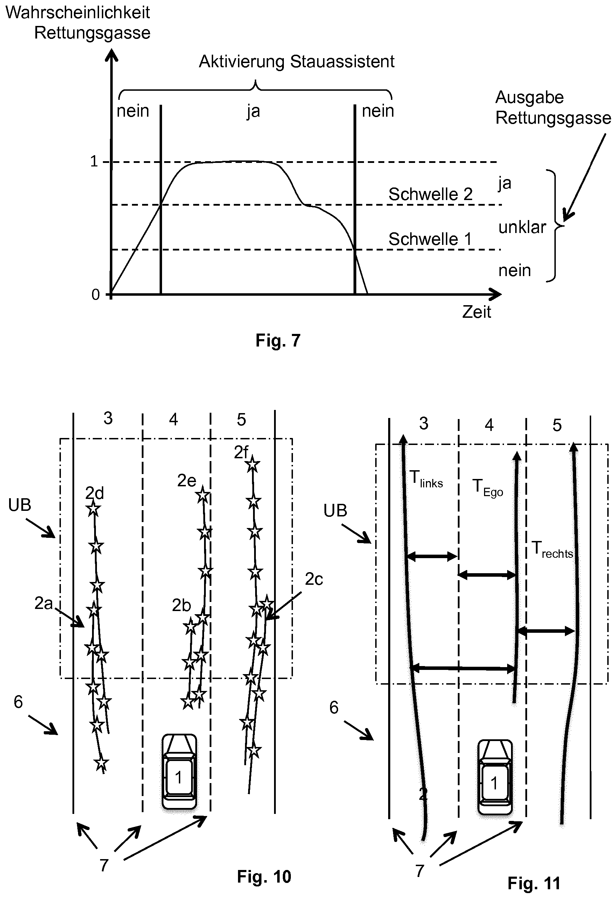

Ausgehend von dem so berechneten Wert der Wahrscheinlichkeit für das Vorliegen einer Rettungsgassensituation kann auch ein Ausgabewert berechnet werden, wie beispielsweise in der Figur 7 dargestellt. Wie die Figur 7 zeigt, kann dabei vorgesehen sein, den Wert der Wahrscheinlichkeit für das Vorliegen einer Rettungsgassensituation mit einem ersten und einem zweiten vorgegebenen Schwellenwerten zu vergleichen. Wenn der Wert der Wahrscheinlichkeit für das Vorliegen einer Rettungsgassensituation unterhalb der Schwelle 1 bleibt, kann bestimmt werden, das keine Rettungsgassensituation vorliegt. Wenn der Wert der Wahrscheinlichkeit für das Vorliegen einer Rettungsgassensituation die Schwelle 2 überschreitet, kann bestimmt werden, das keine Rettungsgassensituation vorliegt. Für einen Wert der Wahrscheinlichkeit für das Vorliegen einer Rettungsgassensituation, der zwischen der Schwelle 1 und der Schwelle 2 liegt, kann bestimmt werden, dass das Vorliegen einer Rettungsgassensituation nicht eindeutig bejaht oder verneint werden kann, und es kann eine entsprechende Ausgabe ausgegeben werden, die anzeigt, dass die Situation unklar ist.

Die Ausgabe des System 50 zur Erkennung einer Rettungsgassensituation kann an die Stauassistenzfunktionseinheit 70 bereitgestellt werden. Dies kann beispielsweise dazu dienen, um die Stauassistenzfunktionseinheit 70 zu deaktivieren, wenn der Wert der Wahrscheinlichkeit für das Vorliegen einer Rettungsgassensituation die zweite Schwelle überschreitet. Die Stauassistenzfunktionseinheit 70 kann wieder aktiviert werden, wenn der Wert der Wahrscheinlichkeit für das Vorliegen einer Rettungsgassensituation unter die erste Schwelle abfällt.

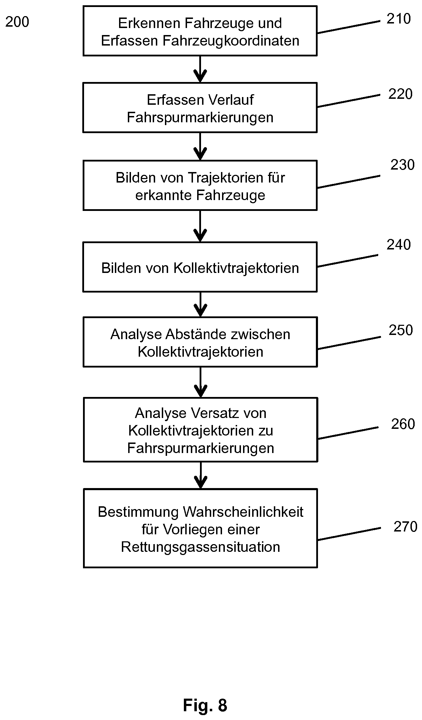

Die Figur 8 zeigt schematisch eines Ablauf eines Verfahrens 200 zur Erkennung einer Rettungsgassensituation gemäß einer weiteren Ausführungsform.

In dem Verfahren 200 zur Erkennung einer Rettungsgassensituation werden in einem Schritt 210 andere Fahrzeuge 2 in der Umgebung des Ego-Fahrzeugs 1 erkannt und deren Positionen erfasst, und es werden in einem Schritt 220 die Fahrspurmarkierungen 7 und deren Position erfasst und ausgewertet, um basierend darauf Verläufe der Fahrspurmarkierungen 7 zu bestimmen.

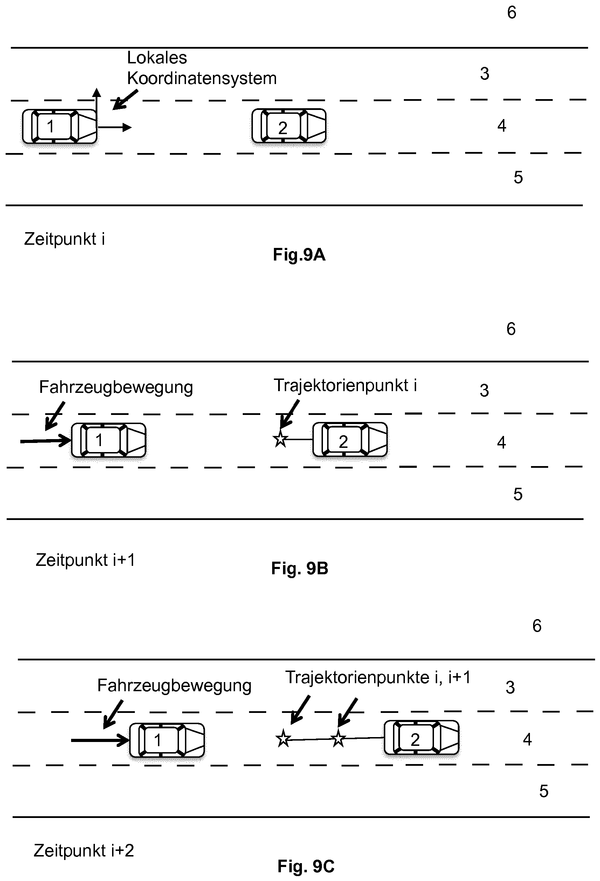

In einem Schritt 230 werden die für die anderen Fahrzeuge 2 erfassten Fahrzeugpositionen aufgezeichnet, um für die anderen Fahrzeuge 2 jeweilige Trajektorien zu bilden. Dies ist beispielhaft in den Figuren 9A bis 9C dargestellt, welche schematisch das Ego-Fahrzeug 1 und ein anderes Fahrzeug 2 zu verschiedenen Zeitpunkten i, i+1 und i+2 zeigen, die sich auf der Fahrbahn 6 bewegen. Zu jedem Zeitpunkt i, i+1 und i+2 erfasst das Ego-Fahrzeug 1 die Position des anderen Fahrzeugs 2, vorzugsweise in einem lokalen, sich mit dem Ego-Fahrzeug 1 mitbewegenden Koordinatensystem, bezeichnet durch den Index L(i), als eine Fahrzeugposition $p_{ID,i}^{L(i)}$ des anderen Fahrzeugs 2 mit der Identifikation ID für den Zeitpunkt i. Die so für jede Identifikation ID erfassten Fahrzeugpositionen $p_{ID,i}^{L(i)}$ werden innerhalb der Dauer eines Zeitfensters, beispielsweise mit einer Dauer von 10s, bei jedem Zeitschritt weiter propagiert und umgerechnet in Fahrzeugpositionen $p_{ID,i}^{L(j)}$ in dem lokalen Koordinatensystem des Ego-Fahrzeugs 1 zum jeweils aktuellen Zeitpunkt j, bezeichnet mit dem Index L(j).

Diese Propagation der Fahrzeugpositionen kann beispielsweise erfolgen, indem die jeweiligen Fahrzeugpositionen $p_{ID,i}^{L(i)}$ zunächst in Fahrzeugpositionen $p_{ID,i}^{G}$ in einem globalen, ortsfesten Koordinatensystem G umgerechnet werden:

$$p_i^G = T_i\, p_{ID,i}^{L(i)}$$

wobei $T_i$ eine Transformationsmatrix darstellt, welche das lokale Koordinatensystem des Ego-Fahrzeugs 1 zum Zeitpunkt i in das globale Koordinatensystem überführt:

$$T_i = \begin{pmatrix} R(\varphi_i) & t_i \\ 0 & 1 \end{pmatrix}$$

wobei der Vektor $t_i$ die Position in globalen Koordinaten des Ego-Fahrzeugs 1 zum Zeitpunkt i, $\varphi_i$ das Heading beziehungsweise den Richtungswinkel des Ego-Fahrzeugs 1 zum Zeitpunkt i, und $R(\varphi_i)$ die entsprechende, durch das Heading $\varphi_i$ vorgegebene Rotationsmatrix darstellen:

$$R(\varphi_i) = \begin{pmatrix} cos(\varphi_i) & sin(\varphi_i) \\ -sin(\varphi_i) & cos(\varphi_i) \end{pmatrix}$$

Unter Verwendung einer Transformationsmatrix $T_j$, welche das lokale Koordinatensystem des Ego-Fahrzeugs 1 zum aktuellen Zeitpunkt j in das globale Koordinatensystem überführt, können auf entsprechende Weise die Fahrzeugpositionen $p_{ID,i}^G$ im globalen Koordinatensystem G umgerechnet werden in Fahrzeugpositionen $p_{ID,i}^{L(j)}$ in den Koordinaten des lokalen Koordinatensystems L(j) des Ego-Fahrzeugs 1 für den aktuellen Zeitpunkt j:

$$p_{ID,i}^{L(j)} = T_j^{-1} p_{ID,i}^G$$

Auf diese Weise kann für jedes der anderen Fahrzeuge 2 eine Trajektorie gebildet werden als Beschreibung des zeitlichen Verlaufs der Bewegung in dem lokalen, sich mit dem Ego-Fahrzeug 1 mitbewegenden Koordinatensystem. So kann beispielsweise für die in der Figur 2B dargestellte Situation für jedes der anderen Fahrzeuge 2 im Untersuchungsbereich eine jeweilige Trajektorie 2a bis 2f gebildet werden, welche den Verlauf der Bewegung des jeweiligen anderen Fahrzeugs 2 abbildet.

In einem weiteren Schritt 240 werden aus den so erhaltenen einzelnen Trajektorien für jedes einzelne der anderen Fahrzeuge 2 kollektive Trajektorien $T_{links}$, $T_{Ego}$, $T_{rechts}$ gebildet, wie beispielhaft in der Figur 11 dargestellt. Eine jeweilige kollektive Trajektorie $T_{links}$, $T_{Ego}$, $T_{rechts}$ repräsentiert dabei jeweils die kollektive Bewegung von anderen Fahrzeugen 2, die sich auf einer gleichen Fahrspur 3, 4, 5 bewegen. Dementsprechend wird ausgehend von den einzelnen Trajektorien 2a bis 2f für die anderen Fahrzeuge 2 zunächst ermittelt, welche der einzelnen Trajektorien 2a bis 2f zu einer jeweiligen kollektiven Trajektorie zusammenzufassen sind.

Die Entscheidung, welche der Trajektorien 2a bis 2f jeweils zu einer kollektiven Trajektorie $T_{links}$, $T_{Ego}$, $T_{rechts}$ zusammenzufassen sind, kann beispielsweise geschehen basierend auf der Fahrspurzuordnung der jeweiligen anderen Fahrzeuge 2, wobei bestimmt werden kann, dass jeweils die Trajektorien 2a bis 2f der anderen Fahrzeuge 2, die einer gleichen Fahrspur 3, 4, 5 zugeordnet sind, zusammenzufassen sind.

Alternativ kann diese Entscheidung auch basierend auf der Lage der Trajektorien 2a bis 2f relativ zum Verlauf der Fahrspurmarkierungen 7 getroffen werden, wobei beispielsweise jeweils diejenigen Trajektorien 2a bis 2f als zu einer kollektiven Trajektorie zusammenzufassen bestimmt werden, welche jeweils zwischen einem gleichen Paar von Fahrspurmarkierungsverläufen 7 liegen.

Weiter alternativ kann diese Entscheidung auch getroffen werden basierend auf einem jeweiligen lateralen Abstand der Trajektorien 2a bis 2f zueinander. So kann beispielsweise bestimmt werden, dass diejenigen Trajektorien 2a bis 2f jeweils zu einer kollektiven Trajektorie $T_{links}$, $T_{Ego}$, $T_{rechts}$ zusammenzufassen sind, die einen lateralen Abstand von weniger als einem vorgegebenen Wert, wie beispielsweise weniger als 1 m, aufweisen.

In dem Beispiel der Figur 10 kann daher beispielsweise bestimmt werden, dass die Trajektorien 2a und 2d zu einer kollektiven Trajektorie $T_{links}$, die Trajektorien 2b und 2e zu einer kollektiven Trajektorie $T_{Ego}$, und die Trajektorien 2c und 2f zu einer kollektiven Trajektorie $T_{rechts}$ zusammenzufassen sind.

Das Zusammenfassen einzelner Trajektorien 2a bis 2f zu einer kollektiven Trajektorie $T_{links}$, $T_{Ego}$, $T_{rechts}$ kann beispielsweise erfolgen, indem eine Ausgleichsrechnung ausgeführt wird, um beispielsweise nach der Methode der kleinsten Quadrate Parameter einer Kurve zu bestimmen, welche möglichst optimal durch die Menge der Trajektorienpunkte der einzelnen Trajektorien 2a bis 2f verläuft, die zusammenzufassen sind. Als Kurve kann beispielswese eine die Kurve eines Polynoms zweiten oder höheren Grades, insbesondere eine Parabel, oder eine Klothoide verwendet werden.

Ausgehend von den so gebildeten kollektiven Trajektorien werden in einem Schritt 250 laterale Abstände zwischen den kollektiven Trajektorien $T_{links}$, $T_{Ego}$, $T_{rechts}$ bestimmt.

Es können dabei beispielsweise innerhalb des Untersuchungsbereichs UB an verschiedenen Entfernungen vom Ego-Fahrzeug 1 jeweils ein lateraler Abstand zwischen zwei Kollektivtrajektorien $T_{links}$, $T_{Ego}$, $T_{rechts}$ für benachbarte Fahrspuren 3, 4, 5 berechnet und ausgewertet werden, entsprechend der direkten Bestimmung der lateralen Abstände, wie vorstehend mit Bezug auf Schritt 130 beschrieben wurde. Beispielsweise können für die kollektiven Trajektorien $T_{links}$ und $T_{Ego}$ für eine Vielzahl von Positionen, die vorzugsweise in regelmäßigen Abständen in Längsrichtung von beispielsweise 1 m, 2 m, 3 m, ..., n m vor dem Ego-Fahrzeug 1 gewählt sind, jeweilige laterale Positionen der kollektiven Trajektorien $T_{links}$ und $T_{Ego}$ bestimmt und daraus die Differenz gebildet werden. Die so gebildeten Differenzen können gemittelt werden, um einen mittleren lateralen Abstand zwischen den anderen Fahrzeugen 2 der linken Fahrspur 3 und der Ego-Fahrspur 4 zu bestimmen.

Alternativ kann auch die vorstehend mit Bezug

auf Schritt 130 beschriebene Vorgehensweise der Histogrammbildung angewandt werden. Es kann dabei ebenfalls für jede kollektive Trajektorie $T_{links}$, $T_{Ego}$, $T_{rechts}$ für eine Vielzahl von Positionen, die vorzugsweise in regelmäßigen Abständen in Längsrichtung von beispielsweise 1 m, 2 m, 3 m, ..., n m vor dem Ego-Fahrzeug 1 gewählt sind, jeweils eine laterale Position bestimmt werden. Die so für die jeweiligen kollektiven Trajektorien $T_{links}$, $T_{Ego}$, $T_{rechts}$ bestimmte Vielzahl, von lateralen Positionswerten können nun jeweils in ein Histogramm eingetragen werden, um anschließend das Histogramm nach den sich ausbildenden Spitzen zu bewerten und die Ausprägungsstärke und die Aussagekraft des Indikators für den lateralen Abstand zwischen anderen Fahrzeugen 2 auf benachbarten Fahrspuren zu bestimmen, wie im Vorhergehenden mit Bezug auf den Schritt 130 beschrieben. Bevorzugt erfolgt, wie im Vorstehenden beschrieben, auch im Schritt 250 diese Auswertung auf Basis von entkrümmten Koordinaten.

In einem weiteren Schritt 260 kann der laterale Abstand zwischen den kollektiven Trajektorien $T_{links}$, $T_{Ego}$, $T_{rechts}$ relativ zum Verlauf der Fahrspurmarkierungen 7 analysiert werden. Auch hierbei können für jede kollektive Trajektorie $T_{links}$, $T_{Ego}$, $T_{rechts}$ für eine Vielzahl von Positionen, die vorzugsweise in regelmäßigen Abständen in Längsrichtung von beispielsweise 1 m, 2 m, 3 m, ..., n m vor dem Ego-Fahrzeug 1 gewählt sind, jeweilige laterale Positionen der kollektiven Trajektorien $T_{links}$ und $T_{Ego}$ bestimmt werden, und ein jeweiliger Versatz beziehungsweise lateraler Abstand zum Verlauf der Fahrspurmarkierungen 7 bestimmt und ausgewertet, um die Ausprägungsstärke und die Aussagekraft des Indikator für den lateralen Versatz der anderen Fahrzeuge 2 relativ zum Verlauf der Fahrspurmarkierungen 7 zu bestimmen, wie im Vorhergehenden mit Bezug auf den Schritt 140 beschrieben. Bevorzugt erfolgt, wie im Vorstehenden beschrieben, auch im Schritt 260 diese Auswertung auf Basis von entkrümmten Koordinaten.

Schließlich kann in einem Schritt 270 basierend auf den verschiedenen Indikatoren, sowie deren jeweiliger Ausprägungsstärke und Aussagekraft, eine Wahrscheinlichkeit bestimmt werden dafür, ob eine Rettungsgassensituation vorliegt oder nicht, wie im Vorstehenden mit Bezug auf den Schritt 150 des Verfahrens 100 beschrieben.

Während die vorliegende Erfindung im Vorstehenden an Hand bevorzugter Ausführungsformen beispielhaft beschrieben wurde, ist die vorliegende Erfindung nicht darauf beschränkt.

So kann es auch möglich sein, das Verfahren 100, 200 zur Erkennung einer Rettungsgassensituation so auszugestalten, dass beispielsweise nur der laterale Abstand zwischen anderen Fahrzeugen 2 analysiert wird, oder nur der laterale Versatz der anderen Fahrzeuge 2 von dem Verlauf der Fahrstreifenmarkierungen 7 analysiert wird.

Wie in der vorstehenden Beschreibung dargelegt, kann es möglich sein, eine Rettungsgassensituation zur erkennen, indem die Positionen von anderen Fahrzeugen 2 erfasst und ausgewertet werden, die sich vor dem Ego-Fahrzeug 1 bewegen. Dies ist jedoch nicht beschränkend, und es kann auch vorgesehen sein, dass ergänzend oder alternativ auch andere Fahrzeuge 2 in anderen Bereichen des Umfelds des Ego-Fahrzeugs 1 erkannt und deren Positionen erfasst und ausgewertet werden, um eine Rettungsgassensituation zu erkennen. Dies kann insbesondere nützlich sein, wenn sich beispielsweise bei im Wesentlichen stehendem Verkehr ein Einsatzfahrzeug durch den Stau von hinten in Richtung auf das Ego-Fahrzeug 1 zu bewegt und die anderen, hinter dem Ego-Fahrzeug 1 befindlichen Fahrzeuge 2 in Antwort auf das sich von hinten nähernde Einsatzfahrzeug eine Rettungsgasse bilden.

Weiter kann es auch möglich sein, neben den vorstehend beschriebenen Indikatoren auch andere Indikatoren zu berücksichtigen, wie beispielsweise einer Verkehrsdichte, einer mittleren Geschwindigkeit 2 der anderen Fahrzeuge und/oder einer Geschwindigkeit des Ego-Fahrzeugs 1, das Vorliegen von Verkehrsinformation, die auf einen Stau hinweist, und/oder das Vorliegen von einer Stauinformation, die von anderen Fahrzeugen über eine Car2Car-Kommunikation verbreitet wird.

**Patentansprüche**

1.   Verfahren (100; 200) zur Erkennung einer Rettungsgassensituation für ein Fahrzeug, als ein Ego-Fahrzeug (1), das sich auf einer Fahrbahn (6) mit mehreren Fahrspuren (3, 4, 5) bewegt, aufweisend die Schritte:

Erkennen (110; 210), mittels Objekterkennungsmitteln, von anderen Fahrzeugen (2), die sich auf der Fahrbahn (6) in derselben Richtung bewegen wie das Ego-Fahrzeug (1), und Erfassen, mittels Fahrzeugpositionserfassungsmitteln, von Fahrzeugpositionen für jedes der erkannten anderen Fahrzeuge (2);
Ermitteln, mittels Rettungsgassenindikatorenerkennungsmittel, der Ausprägungsstärke eines oder mehrerer Indikatoren für das Vorliegen einer Rettungsgassensituation; und Bestimmen (150; 270), mittels Rettungsgassensituationserkennungsmittel, einer Wahrscheinlichkeit dafür, ob eine Rettungsgassensituaton vorliegt, basierend auf dem oder den ermittelten Indikatoren sowie deren jeweiliger Ausprägungsstärke und Aussagekraft, für jeden der Indikatoren die Aussagekraft bestimmt wird, die angibt, wie aussagekräftig der ermittelte Indikator ist, basierend auf einer Anzahl der zur Ermittlung des betreffenden Indikators berücksichtigten anderen Fahrzeuge (2) und/oder die Zeitdauer und/oder die Wegstrecke, für welche die ermittelte Ausprägungsstärke des betreffenden Indikators über einem Schwellenwert liegt, wobei

der eine oder die mehreren Indikatoren anzeigend sind für zumindest eines von:

einem lateralen Abstand ($d_{2a,2b}$, $d_{2b,2c}$) zwischen anderen Fahrzeugen (2), die als auf benachbarten Fahrspuren (3, 4, 5) fahrend erkannt oder vermutet werden, und/oder einem lateralen Versatz ($a_{2a,1}$, $a_{2a,r}$, $a_{2b,1}$, $a_{2b,r}$, $a_{2c,1}$, $a_{2c,r}$) von anderen Fahrzeugen (2) relativ zu Verläufen von Fahrspurmarkierungen (7), welche eine Fahrspur (3, 4, 5), auf der sich ein jeweiliges anderes Fahrzeug (2) bewegt, seitlich begrenzen, und/oder

einem lateralen Versatz von anderen Fahrzeugen (2) relativ zu einem jeweiligen Fahrspurverlauf ($FS_{links}$, $FS_{Ego}$, $FS_{rechts}$) für eine Fahrspur (3, 4, 5), auf der sich ein jeweiliges anderes Fahrzeug (2) bewegt, und dass

weiter die Ausprägungsstärke zumindest einer der folgenden Indikatoren ermittelt wird:

ob andere Fahrzeuge (2) kontinuierlich auf Fahrspurmarkierungen (7) fahren, und/oder

ob andere Fahrzeuge (2), die sich auf einer ersten Fahrspur (3, 4, 5) bewegen, in einer ersten Richtung lateral versetzt sind, und gleichzeitig andere Fahrzeuge (2), die sich auf einer hierzu benachbarten zweiten Fahrspur (3, 4, 5) bewegen, in einer zweiten, zur ersten Richtung entgegengesetzten Richtung lateral versetzt sind.

2. Verfahren (100; 200) nach Anspruch 1, wobei weiter ein Untersuchungsbereich (UB) definiert ist, und wobei nur diejenigen anderen Fahrzeuge (2) berücksichtigt werden, die eine Fahrzeugposition innerhalb des Untersuchungsbereichs (UB) aufweisen.

3. Verfahren (100; 200) nach Anspruch 1 oder 2, wobei im Fall von drei oder mehr Fahrspuren (3, 4, 5), weiter ermittelt wird, ob andere Fahrzeuge (2), die sich auf einer weiteren, dritten Fahrspur (3, 4, 5) bewegen, die der ersten oder der zweiten Fahrspur (3, 4, 5) benachbart ist, in einer gleichen Richtung lateral versetzt sind, wie die andere Fahrzeuge (2), die sich auf der hierzu benachbarten ersten oder zweiten Fahrspur (3, 4, 5) bewegen.

4. Verfahren (100; 200) nach einem der vorstehenden Ansprüche, wobei im Schritt des Bestimmens, basierend auf dem oder den ermittelten Indikatoren, ob eine Rettungsgassensituation vorliegt, ein Wahrscheinlichkeitswert für das Vorliegen einer Rettungsgassensituation berechnet wird.

5. Verfahren (100; 200) nach Anspruch 4, wobei aus den Ausprägungsstärken der ermittelten Indikatoren ein Ausprägungsstärken-Gesamtwert und aus den Werten der Aussagekraft der betreffenden Indikatoren ein Aussagekraft-Gesamtwert berechnet und miteinander multipliziert werden, um den Wahrscheinlichkeitswert für das Vorliegen einer Rettungsgassensituation zu berechnen.

6. Verfahren (100; 200) nach einem der vorstehenden Ansprüche, wobei zur Bestimmung der lateralen Abstände zwischen anderen Fahrzeugen (2) die lateralen Positionen der anderen Fahrzeuge (2) in einem Histogramm eingetragen werden, wobei der Abstand zwischen anderen Fahrzeugen (2) auf benachbarten Fahrspuren (3, 4, 5) bestimmt wird als der Abstand zwischen benachbarten Spitzen des Histogramms, wobei bevorzugt nur solche Spitzen berücksichtigt werden, die eine Schwelle überschreiten.

7. Verfahren (100; 200) nach einem der vorstehenden Ansprüche, wobei die erfassten Fahrzeugpositionen der anderen Fahrzeuge (2) umgerechnet werden in ein entkrümmtes Koordinatensystem, wobei ein Verlauf der Ego-Fahrspur zu Grunde gelegt wird und die Fahrzeugpositionen der anderen Fahrzeuge (2) angegeben werden mit einer Längskoordinate, welche den Abstand vom Ego-Fahrzeug (1) entlang der Ego-Fahrspur ($FS_{Ego}$) angibt, und einer lateralen Koordinate, welche den lateralen Abstand ($c_{2a,FS\_Ego}$, $c_{2b,FS\_Ego}$, $c_{2c,FS\_Ego}$) des betreffenden anderen Fahrzeugs (2) zur Ego-Fahrspur ($FS_{Ego}$) angibt.

8. Verfahren (100; 200) nach einem der vorstehenden Ansprüche, wobei die für die erkannten anderen Fahrzeuge (2) erfassten Fahrzeugpositionen für zumindest eine vorbestimmte Zeitdauer aufgezeichnet und gespeichert werden, um für die anderen Fahrzeuge (2) jeweils zugeordnete Trajektorien zu bilden.

9. Verfahren (200) nach Anspruch 8, weiter aufweisend ein Zusammenfassen von Trajektorien für die anderen Fahrzeuge (2) zu kollektiven Trajektorien ($T_{links}$, $T_{Ego}$, $T_{rechts}$), wobei

die Bestimmung, welche der Trajektorien für die anderen Fahrzeuge (2) jeweils zu einer kollektiven Trajektorie ($T_{links}$, $T_{Ego}$, $T_{rechts}$) zusammenzufassen sind, getroffen wird basierend auf einer Fahrspurzuordnung der anderen Fahrzeuge, und/oder einer jeweiligen Lage der anderen Trajektorien für die anderen Fahrzeuge (2) relativ zu den Verläufen der Fahrspurmarkierungen (7), und/oder einem jeweiligen lateralen Abstand der Trajektorien für die anderen Fahrzeuge (2) zueinander, wobei zwei oder mehr Trajektorien für die anderen Fahrzeuge (2) als zu einer kollektiven Trajektorie zusammenzufassen bestimmt werden, wenn diese jeweils anderen Fahrzeugen (2) zugeordnet sind, die einer gleichen Fahrspur (3, 4, 5) zugeordnet sind, und/oder wenn diese jeweils zwischen zwei gleichen Fahrspurmarkierungsverläufen (7) liegen, und/oder wenn diese jeweils einen lateralen Abstand voneinander aufweisen, der weniger als einen vorgegebenen Wert beträgt.

10. Verfahren (100; 200) nach Anspruch 9, wobei ein jeweiliger kollektiver Trajektorienverlauf ($T_{links}$, $T_{Ego}$, $T_{rechts}$) bestimmt wird basierend auf einer Ausgleichsrechnung, um Parameter eines Polynoms zweiten Grades oder höher, oder einer Klothoide zu bestimmen, das beziehungsweise die durch die Menge der Trajektorienpunkte der zusammenzufassenden Trajektorien gelegt wird, wobei die Ausgleichsrechnung vorzugsweise auf der Methode der kleinsten Quadrate basiert.

11. Verfahren (100; 200) nach einem der vorstehenden Ansprüche, wobei der Verlauf von Fahrspurmarkierungen (7) und/oder der Fahrspurverlauf ($FS_{links}$, $FS_{Ego}$, $FS_{rechts}$) bestimmt wird mittels einem kamerabasierten Fahrspurerkennungssystem (20) und/oder basierend auf Informationen einer digitalen Karte.

12. Verfahren nach einem der vorstehenden Ansprüche, wobei das Ego-Fahrzeug (1) eine Warneinheit (60) zum Hinweisen eines Fahrers des Ego-Fahrzeugs (1) auf eine Rettungsgassensituation und/oder eine Stauassistenzfunktionseinheit (70) aufweist, wobei die Warneinheit (60) aktiviert wird, wenn bestimmt wird, dass eine Rettungsgassensituation vorliegt, und/oder wobei die Stauassistenzfunktionseinheit (70) deaktiviert wird, wenn bestimmt wird, dass eine Rettungsgassensituation vorliegt, und wieder aktiviert wird, wenn bestimmt wird, dass eine Rettungsgassensituation nicht oder nicht mehr vorliegt.

13. System (50) zur Erkennung einer Rettungsgassensituation für ein Fahrzeug, als ein Ego-Fahrzeug (1), das sich auf einer Fahrbahn (6) mit mehreren Fahrspuren (3, 4, 5) bewegt, aufweisend:

    Objekterkennungsmittel, die eingerichtet sind, ein oder mehrere andere Fahrzeuge (2) zu erkennen, die sich auf der Fahrbahn (6) in derselben Richtung bewegen wie das Ego-Fahrzeug (1);
    Fahrzeugpositionserfassungsmittel, die eingerichtet sind, Fahrzeugpositionen für jedes der erkannten anderen Fahrzeuge (2) zu erfassen;
    Rettungsgassenindikatorenermittlungsmittel, die eingerichtet sind, die Ausprägungsstärke eines oder mehrerer Indikatoren für das Vorliegen einer Rettungsgassensituation zu ermitteln, und
    Rettungsgassensituationserkennungsmittel zum Bestimmen, basierend auf dem oder den ermittelten Indikatoren, ob eine Rettungsgassensituation vorliegt, wobei das System (50) eingerichtet ist, das Verfahren (100, 200) nach einem der Ansprüche 1 bis 12 auszuführen.

14. Fahrzeug (1), aufweisend ein System (50) nach Anspruch 13.

**Claims**

1. Method (100; 200) for detecting an emergency path situation for a vehicle, as an ego-vehicle (1), moving on a road (6) with multiple traffic lanes (3, 4, 5), comprising the steps of:

    detecting (110; 210), by means of object detecting means, other vehicles (2) that are moving on the road (6) in the same direction as the ego-vehicle (1), and sensing, by means of vehicle position sensing means, vehicle positions for each of the other vehicles (2) detected;
    ascertaining, by means of emergency path indicator detecting means, the intensity of one or more indicators for the existence of an emergency path situation; and
    determining (150; 270), by means of emergency path situation detecting means, a probability of whether an emergency path situation exists, on the basis of the ascertained indicator or indicators and their respective intensity and meaningfulness, wherein
    the meaningfulness is determined for each of the indicators, indicating how meaningful the ascertained indicator is, on the basis of a number of the other vehicles (2) taken into consideration for ascertaining the indicator concerned and/or on the basis of the period of time and/or the distance travelled for which the ascertained intensity of the indicator concerned lies above a threshold value, wherein
    the one or more indicators is/are indicative of at least one of the following: a lateral distance ($d_{2a,2b}$, $d_{2b,2c}$) between other vehicles (2) detected as or presumed to be driving in adjacent traffic lanes (3, 4, 5), and/or a lateral offset ($a_{2a,l}$, $a_{2a,r}$, $a_{2b,l}$, $a_{2b,r}$, $a_{2c,l}$, $a_{2c,r}$) of other vehicles (2) relative to progressions of traffic lane markings (7) laterally delimiting a traffic lane (3, 4, 5) in which a respective other vehicle (2) is moving, and/or

a lateral offset of other vehicles (2) relative to a respective traffic lane progression ($FS_{links}$, $FS_{Ego}$, $FS_{rechts}$) for a traffic lane (3, 4, 5) in which a respective other vehicle (2) is moving,

and in that furthermore the intensity of at least one of the following indicators is ascertained:

whether other vehicles (2) are driving continuously on traffic lane markings (7), and/or whether other vehicles (2) that are moving in a first traffic lane (3, 4, 5) are laterally offset in a first direction, and at the same time other vehicles (2) that are moving in a second traffic lane (3, 4, 5) adjacent thereto are laterally offset in a second direction opposite to the first direction.

2. Method (100; 200) according to Claim 1, wherein furthermore an area under investigation (UB) is defined, and wherein only those other vehicles (2) that have a vehicle position within the area under investigation (UB) are taken into consideration.

3. Method (100; 200) according to Claim 1 or 2, wherein, in the case of three or more traffic lanes (3, 4, 5), it is further ascertained whether other vehicles (2) that are moving in a further, third traffic lane (3, 4, 5), which is adjacent to the first or the second traffic lane (3, 4, 5), are laterally offset in a same direction as the other vehicles (2) that are moving in the first or second traffic lane (3, 4, 5) adjacent thereto.

4. Method (100; 200) according to one of the preceding claims, wherein, in the step of determining whether, on the basis of the ascertained indicator or indicators, an emergency path situation exists, a probability value for the existence of an emergency path situation is calculated.

5. Method (100; 200) according to Claim 4, wherein an overall intensity value is calculated from the intensities of the ascertained indicators and an overall meaningfulness value is calculated from the values of the meaningfulness of the indicators concerned and they are multiplied together to calculate the probability value for the existence of an emergency path situation.

6. Method (100; 200) according to one of the preceding claims, wherein, for determining the lateral distances between other vehicles (2), the lateral positions of the other vehicles (2) are entered in a histogram, wherein the distance between other vehicles (2) in adjacent traffic lanes (3, 4, 5) is determined as the distance between adjacent peaks of the histogram, wherein preferably only those peaks that exceed a threshold are taken into consideration.

7. Method (100; 200) according to one of the preceding claims, wherein the sensed vehicle positions of the other vehicles (2) are converted into a decurved coordinate system, wherein a progression of the ego-lane is taken as a basis and the vehicle positions of the other vehicles (2) are indicated by a longitudinal coordinate, which indicates the distance from the ego-vehicle (1) along the ego-lane ($FS_{Ego}$), and a lateral coordinate, which indicates the lateral distance ($c_{2a, FS\_Ego}$, $c_{2b, FS\_Ego}$, $c_{2c, ES\_Ego}$) of the other vehicle (2) concerned from the ego-lane ($FS_{Ego}$).

8. Method (100; 200) according to one of the preceding claims, wherein the vehicle positions sensed for the detected other vehicles (2) are recorded for at least one predetermined time period and stored in order to form respectively assigned trajectories for the other vehicles (2).

9. Method (200) according to Claim 8, further comprising a compilation of trajectories for the other vehicles (2) to form collective trajectories ($T_{links}$, $T_{Ego}$, $T_{rechts}$), wherein

the determination of which of the trajectories for the other vehicles (2) are to be compiled in each case to form a collective trajectory ($T_{links}$, $T_{Ego}$, $T_{rechts}$) is made on the basis of a traffic lane assignment of the other vehicles, and/or a respective position of the other trajectories for the other vehicles (2) relative to the progressions of the traffic lane markings (7), and/or a respective lateral distance of the trajectories for the other vehicles (2) from one another, wherein two or more trajectories for the other vehicles (2) are determined as to be compiled to form a collective trajectory if they are assigned to other vehicles (2) respectively that are assigned to a same traffic lane (3, 4, 5), and/or if they lie respectively between two identical traffic lane marking progressions (7), and/or if they are respectively at a lateral distance from one another that is less than a prescribed value.

10. Method (100; 200) according to Claim 9, wherein a respective collective trajectory progression ($T_{links}$, $T_{Ego}$, $T_{rechts}$) is determined on the basis of a calculus of observations, in order to determine parameters of a polynomial of the second degree or higher or a clothoid placed through the set of trajectory points of the trajectories to be compiled, wherein the calculus of observations is preferably based on the method of least squares.

11. Method (100; 200) according to one of the preceding claims, wherein the progression of traffic lane markings (7) and/or the course of the traffic lane (FS$_{links}$, FS$_{Ego}$, FS$_{rechts}$) is determined by means of a camera-based traffic lane detection system (20) and/or on the basis of information of a digital map.

12. Method according to one of the preceding claims, wherein the ego-vehicle (1) has a warning unit (60) for alerting a driver of the ego-vehicle (1) to an emergency path situation and/or has a congestion assistance functional unit (70), wherein the warning unit (60) is activated if it is determined that an emergency path situation exists, and/or wherein the congestion assistance functional unit (70) is deactivated if it is determined that an emergency path situation exists and is activated again if it is determined that an emergency path situation does not exist or no longer exists.

13. System (50) for detecting an emergency path situation for a vehicle, as an ego-vehicle (1), moving on a road (6) with multiple traffic lanes (3, 4, 5), comprising:

object detecting means, which are designed to detect one or more other vehicles (2) that are moving on the road (6) in the same direction as the ego-vehicle (1);
vehicle position sensing means, which are designed to sense vehicle positions for each of the other vehicles (2) detected;
emergency path indicator ascertaining means, which are designed to ascertain the intensity of one or more indicators for the existence of an emergency path situation; and
emergency path situation detecting means for determining, on the basis of the ascertained indicator or indicators, whether an emergency path situation exists, wherein the system (50) is designed to carry out the method (100, 200) according to one of Claims 1 to 12.

14. Vehicle (1), comprising a system (50) according to Claim 13.

**Revendications**

1. Procédé (100 ; 200) de reconnaissance d'une situation de couloir de secours pour un véhicule, en tant que véhicule autonome et connecté (1), qui se déplace sur une chaussée (6) dotée de plusieurs voies de circulation (3, 4, 5), comprenant les étapes suivantes :

reconnaissance (110 ; 210), à l'aide de moyens de reconnaissance d'objets, d'autres véhicules (2) qui se déplacent sur la chaussée (6) dans la même direction que le véhicule autonome et connecté (1), et détection, à l'aide de moyens de détection de position de véhicule, de positions de véhicule pour chacun des autres véhicules (2) reconnus ;
identification, à l'aide de moyens de reconnaissance d'indicateurs de couloir de secours, de la force d'expression d'un ou de plusieurs indicateurs pour la présence d'une situation de couloir de secours ; et
détermination (150 ; 270), à l'aide de moyens de reconnaissance de situation de couloir de secours, d'une probabilité de la présence d'une situation de couloir de secours, en se basant sur le ou les indicateurs identifiés ainsi que leur force d'expression et leur pertinence respectives, la pertinence, qui indique à quel point l'indicateur identifié est pertinent, étant déterminée pour chacun des indicateurs en se basant sur un nombre d'autres véhicules (2) pris en compte pour identifier l'indicateur concerné et/ou la durée et/ou la distance parcourue pour laquelle la force d'expression déterminée de l'indicateur concerné est supérieure à une valeur de seuil, le ou les plusieurs indicateurs étant indicatifs d'au moins l'un des éléments suivants : une distance latérale (d$_{2a,2b}$, d$_{2b,2c}$) entre d'autres véhicules (2), qui sont reconnus ou suspectés de circuler sur des voies de circulation (3, 4, 5) voisines, et/ou un décalage latéral (a$_{2a,l}$, a$_{2a,r}$, a$_{2b,l}$, a$_{2b,r}$, a$_{2c,l}$, a$_{2c,r}$) d'autres véhicules (2) par rapport aux tracés de marquages de voie de circulation (7), lesquels délimitent latéralement une voie de circulation (3, 4, 5) sur laquelle se déplace un autre véhicule (2) respectif, et/ou un décalage latéral d'autres véhicules (2) par rapport à un tracé de voie de circulation (FS$_{links}$, FS$_{Ego}$, FS$_{rechts}$) respectif d'une voie de circulation (3, 4, 5) sur laquelle se déplace un autre véhicule (2) respectif, et la force d'expression d'au moins l'un des indicateurs suivants étant en plus identifiée :

si d'autres véhicules (2) circulent continuellement sur des marquages de voie de circulation (7), et/ou
si d'autres véhicules (2), qui se déplacent sur une première voie de circulation (3, 4, 5), sont décalés latéralement dans une première direction et, en même temps, d'autres véhicules (2), qui se déplacent sur une deuxième voie de circulation (3, 4, 5) voisine de celle-ci, sont décalés latéralement dans une deuxième direction opposée à la première direction.

**2.** Procédé (100 ; 200) selon la revendication 1, une zone d'examen (UB) étant en outre définie, et seuls les autres véhicules (2) qui présentent une position de véhicule à l'intérieur de la zone d'examen (UB) étant pris en compte.

**3.** Procédé (100 ; 200) selon la revendication 1 ou 2, une identification étant en outre effectuée dans le cas de trois voies de circulation (3, 4, 5) ou plus, afin de déterminer si d'autres véhicules (2), qui se déplacent sur une troisième voie de circulation (3, 4, 5) supplémentaire, laquelle est voisine de la première ou de la deuxième voie de circulation (3, 4, 5), sont décalés latéralement dans une même direction que les autres véhicules (2) qui se déplacent sur la première ou la deuxième voie de circulation (3, 4, 5) voisine de celle-ci .

**4.** Procédé (100 ; 200) selon l'une des revendications précédentes, une valeur de probabilité pour la présence d'une situation de couloir de secours étant calculée à l'étape de détermination, en se basant sur le ou les indicateurs identifiés qui indiquent si une situation de couloir de secours est présente.

**5.** Procédé (100 ; 200) selon la revendication 4, une valeur totale des forces d'expression étant calculée à partir des forces d'expression des indicateurs identifiés et une valeur totale de pertinence étant calculée à partir des valeurs de pertinence des indicateurs concernés, puis multipliées entre elles afin de calculer la valeur de probabilité de la présence d'une situation de couloir de secours.

**6.** Procédé (100 ; 200) selon l'une des revendications précédentes, la détermination des distances latérales entre d'autres véhicules (2) étant effectuée en inscrivant les positions latérales des autres véhicules (2) dans un histogramme, la distance entre d'autres véhicules (2) sur des voies de circulation (3, 4, 5) voisines étant déterminée comme étant la distance entre des sommets voisins de l'histogramme, seuls les sommets qui dépassent un seuil étant de préférence pris en compte.

**7.** Procédé (100 ; 200) selon l'une des revendications précédentes, les positions de véhicule détectées des autres véhicules (2) étant converties en un système de coordonnées défléchi, un tracé de la voie de circulation de véhicule autonome et connecté étant pris pour base et les positions de véhicule des autres véhicules (2) étant indiquées avec une coordonnée longitudinale, laquelle indique la distance du véhicule autonome et connecté (1) le long de la voie de circulation de véhicule autonome et connecté ($FS_{Ego}$), et une coordonnée latérale, laquelle indique la distance latérale ($c_{2a, FS\_Ego}$, $c_{2b, FS\_Ego}$, $c_{2c, FS\_Ego}$) de l'autre véhicule (2) concerné par rapport à la voie de circulation de véhicule autonome et connecté ($FS_{Ego}$) .

**8.** Procédé (100 ; 200) selon l'une des revendications précédentes, les positions de véhicule détectées des autres véhicules (2) reconnus étant enregistrées et mémorisées pendant au moins une durée prédéterminée afin de former des trajectoires respectivement associées pour les autres véhicules (2).

**9.** Procédé (200) selon la revendication 8, comprenant en outre un regroupement de trajectoires pour les autres véhicules (2) en des trajectoires collectives ($T_{links}$, $T_{Ego}$, $T_{rechts}$),
la détermination des trajectoires pour les autres véhicules (2) qui sont respectivement regroupées en une trajectoire collective ($T_{links}$, $T_{Ego}$, $T_{rechts}$) étant effectuée en se basant sur une association de voie de circulation des autres véhicules et/ou une position respective des autres trajectoires pour les autres véhicules (2) par rapport aux tracés des marquages de voie de circulation (7) et/ou une distance latérale respective des trajectoires pour les autres véhicules (2) entre elles, deux ou plusieurs trajectoires pour les autres véhicules (2) étant déterminées comme à regrouper en une trajectoire collective lorsque celles-ci sont respectivement associées à d'autres véhicules (2) qui sont associés à une même voie de circulation (3, 4, 5) et/ou lorsque celles-ci se trouvent respectivement entre deux mêmes tracés de marquage de voie de circulation (7), et/ou lorsque celles-ci présentent respectivement une distance latérale l'une par rapport à l'autre, qui est inférieure à une valeur prédéfinie.

**10.** Procédé (100 ; 200) selon la revendication 9, un tracé de trajectoire collectif ($T_{links}$, $T_{Ego}$, $T_{rechts}$) respectif étant déterminé en se basant sur un calcul d'égalisation afin de déterminer des paramètres d'un polynôme du deuxième degré ou plus, ou d'une clothoïde, lequel ou laquelle est défini par l'ensemble des points de trajectoire des trajectoires à regrouper, le calcul d'égalisation étant de préférence basé sur la méthode des moindres carrés.

**11.** Procédé (100 ; 200) selon l'une des revendications précédentes, le tracé des marquages de voie de circulation (7) et/ou le tracé de voie de circulation ($FS_{links}$, $FS_{Ego}$, $FS_{rechts}$) étant déterminé au moyen d'un système de reconnaissance de voie de circulation (20) à base de caméra et/ou en se basant sur les informations d'une carte numérique.

**12.** Procédé selon l'une des revendications précédentes, le véhicule autonome et connecté (1) possédant une unité d'avertissement (60) destinée à notifier un conducteur du véhicule autonome et connecté (1) de la présence d'une situation de couloir de secours et/ou une unité fonctionnelle d'assistance d'embouteillage (70), l'unité d'avertissement (60) étant activée lorsqu'il est déterminé qu'une situation de couloir de secours est présente et/ou l'unité fonctionnelle d'assistance d'embouteillage (70) étant désactivée lorsqu'il est déterminé qu'une situation de couloir de secours est présente, et de nouveau activée lorsqu'il est déterminé qu'une situation de couloir de secours n'est pas ou plus présente.

13. Système (50) de reconnaissance d'une situation de couloir de secours pour un véhicule, en tant que véhicule autonome et connecté (1), qui se déplace sur une chaussée (6) dotée de plusieurs voies de circulation (3, 4, 5), comprenant :

des moyens de reconnaissance d'objets, qui sont conçus pour reconnaître un ou plusieurs autres véhicules (2) qui se déplacent sur la voie de circulation (6) dans la même direction que le véhicule autonome et connecté (1) ;
des moyens de détection de position de véhicule, qui sont conçus pour détecter des positions de véhicule pour chacun des autres véhicules (2) reconnus ;
des moyens d'identification d'indicateurs de couloir de secours, qui sont conçus pour identifier la force d'expression d'un ou de plusieurs indicateurs de la présence d'une situation de couloir de secours ; et
des moyens de reconnaissance de situation de couloir de secours destinés à déterminer, sur la base du ou des indicateurs identifiés, si une situation de couloir de secours est présente, le système (50) étant conçu pour mettre en œuvre le procédé (100, 200) selon l'une des revendications 1 à 12.

14. Véhicule (1), comprenant un système (50) selon la revendication 13.

**Fig. 1**

100

| Erkennen anderer Fahrzeuge und Erfassen Fahrzeugkoordinaten | 110 |

| Erfassen Verlauf Fahrspurmarkierungen | 120 |

| Analyse Abstände zwischen anderen Fahrzeugen | 130 |

| Analyse Versatz anderer Fahrzeuge zu Fahrspurmarkierungsverlauf | 140 |

| Bestimmung Wahrscheinlichkeit für Vorliegen einer Rettungsgassensituation | 150 |

**Fig. 3**

## Normalfall

3    4    5

UB

6

**Fig. 2A**    7

## Rettungsgasse

3    4    5

7    **Fig. 2B**

3    4    5

$a_{2a,l}$    $a_{2a,r}$    $a_{2b,l}$    $a_{2b,r}$  8    $a_{2c,l}$    $a_{2c,r}$

2a    $d_{2b,2c}$    2c

2b

$d_{2a,2b}$

8    8

7a    7b    7c    7d

**Fig. 4**

Häufigkeit

Peaks

Schwelle

0    laterale Position

**Fig. 5**

FS links    FS Ego    FS rechts

3    4    5

$b_{2a}$    $b_{2b}$    8    $b_{2c}$

2a    2b    2c

$c_{2a,FS\,Ego}$

8    8

$c_{2b,FS\,Ego}$

$c_{2c,FS\,Ego}$

7a    7b    7c    7d

**Fig. 6**

Wahrscheinlichkeit
Rettungsgasse

Aktivierung Stauassistent

nein          ja          nein

Ausgabe
Rettungsgasse

1

Schwelle 2          ja

Schwelle 1          unklar

nein

0

Zeit

**Fig. 7**

3   |   4   |   5

UB

2f
2e
2d
2a          2b          2c

6

7

**Fig. 10**

3   |   4   |   5

$T_{links}$   $T_{Ego}$

UB

$T_{rechts}$

6

7

**Fig. 11**

200

Erkennen Fahrzeuge und
Erfassen Fahrzeugkoordinaten — 210

Erfassen Verlauf
Fahrspurmarkierungen — 220

Bilden von Trajektorien für
erkannte Fahrzeuge — 230

Bilden von Kollektivtrajektorien — 240

Analyse Abstände zwischen
Kollektivtrajektorien — 250

Analyse Versatz von
Kollektivtrajektorien zu
Fahrspurmarkierungen — 260

Bestimmung Wahrscheinlichkeit
für Vorliegen einer
Rettungsgassensituation — 270

**Fig. 8**

6

Lokales
Koordinatensystem

3

1

2

4

5

Zeitpunkt i

**Fig.9A**

6

Fahrzeugbewegung

Trajektorienpunkt i

3

1

☆—2

4

5

Zeitpunkt i+1

**Fig. 9B**

6

Fahrzeugbewegung

Trajektorienpunkte i, i+1

3

1

☆—☆—2

4

5

Zeitpunkt i+2

**Fig. 9C**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012200950 B3
- DE 102011102024 A1
- DE 10235289 A1
- DE 102010051245 A1
- DE 10328256 A1